# EUROPEAN PATENT SPECIFICATION

(11) **EP 1 550 795 B1**
(45) Date of publication and mention of the grant of the patent: **04.11.2009**
(21) Application number: 03809848.9
(22) Date of filing: 24.09.2003
(51) Int. Cl.: F01M 1/06, B62M 23/02, F02B 67/04

(54) **FOUR-CYCLE, SINGLE-CYLINDER ENGINE**
VIERTAKT-EINZYLINDERMOTOR
MOTEUR A CYLINDRE UNIQUE A QUATRE CYCLES

(30) Priority: 26.09.2002 JP 2002281789; 26.09.2002 JP 2002281790; 26.09.2002 JP 2002281791
(43) Date of publication of application: 06.07.2005
(73) Proprietor: HONDA GIKEN KOGYO KABUSHIKI KAISHA, Minato-ku, Tokyo 107-8556 (JP)
(72) Inventor: MURAOKA, Yuuki c/o Kabushiki Kaisha Honda, Saitama 351-0193 (JP); WACHIGAI, Kaoru c/o Kabushiki Kaisha Honda, Saitama 351-0193 (JP); SAKAMOTO, Masami c/o Kabushiki Kaisha Honda, Saitama 351-0193 (JP); WATANABE, Satoru c/o Kabushiki Kaisha Honda, Saitama 351-0193 (JP)
(74) Representative: Piésold, Alexander James
(86) International application number: PCT/JP2003/012160
(87) International publication number: WO 2004/040100

(56) References cited:
- EP-A- 1 048 845
- FR-A- 2 353 432
- FR-E- 81 489
- GB-A- 848 550
- JP-A- 2000 274 241
- JP-A- 2000 274 241
- JP-A- 2002 200 999
- JP-B2- 1 051 643
- JP-U- 1 145 913
- JP-U- 60 116 011
- JP-U- 61 122 342
- JP-Y2- 7 041 849
- US-A- 5 092 292

## Description

### FIELD OF THE INVENTION

The present invention relates to a four-cycle single-cylinder engine comprising a crankshaft connected through a connecting rod and a crank pin to a piston slidably fitted in a cylinder bore, the crankshaft being rotatably borne on a crankcase through a pair of bearings disposed with a spacing therebetween in the axial direction of the crankshaft, a wrapping driving wheel for transmitting the rotational power of the crankshaft to a camshaft of a valve-operating device, and a driving gear for transmitting the rotational power of the crankshaft to an oil pump disposed in the crankcase, the wrapping driving wheel and the driving gear being firmly attached to the crankshaft.

### BACKGROUND ART

Conventionally, such a four-cycle single-cylinder engine as above-mentioned has been known, for example, as in the Japanese Patent Laid-open No. 9-144520, JP-A-2000274241 or the like.

In the above-mentioned conventional system, however, the wrapping driving wheel and the driving gear are separately disposed on the outer side of the pair of bearings interposed between the crankcase and the crankshaft, and it is necessary for forming a sealed oil chamber for each of the wrapping driving wheel and the driving gear, so that the width of the engine would be comparatively large in the direction along the axis of the crankshaft.

### DISCLOSURE OF THE INVENTION

The present invention has been made in consideration of the above circumstances. Accordingly, it is an object of the present invention to provide a four-cycle single-cylinder engine so constituted that the width of the engine in the direction along the axis of the crankshaft can be reduced.

In order to attain the above object, according to a first aspect and feature of the present invention, there is provided a four-cycle single-cylinder engine comprising a crankshaft connected through a connecting rod and a crank pin to a piston slidably fitted in a cylinder bore, the crankshaft being rotatably borne on a crankcase through a pair of bearings disposed with a spacing therebetween in the axial direction of the crankshaft, a wrapping driving wheel for transmitting a rotational power of the crankshaft to a camshaft of a valve-operating device, and a driving gear for transmitting the rotational power of the crankshaft to an oil pump disposed in the crankcase, the wrapping driving wheel and the driving gear being firmly attached to the crankshaft, **characterized in that** the driving gear is disposed on the outer side of one of the bearings, and meshes with a driven gear, the wrapping driving wheel integrally formed with the driving gear is disposed on the further outer side of the driving gear, said oil pump is located at substantially the same position as said one bearing in the axial direction of the crankshaft, and an input shaft is provided for transmitting power from the driving gear to the oil pump, and wherein a case member for housing a power transmission unit cooperates with said crankcase to define a space therebetween within which space the driving gear, the wrapping driving wheel, the oil pump and the input shaft are arranged.

With the first feature, the wrapping driving wheel and the driving gear are disposed on the outer side of one of both the bearings, and it is unnecessary to form a sealed oil chamber for each of the wrapping driving wheel and the driving gear, so that the size of the engine can be accordingly reduced in the direction along the axis of the crankshaft. Moreover, since the wrapping driving wheel is disposed on the outer side of the driving gear, a transmission member such as a chain wrapped around the wrapping driving wheel can be disposed at a position comparatively remote from the cylinder bore, whereby the thermal influence exerted on the transmission member from the cylinder bore side can be suppressed.

According to a second aspect and feature of the present invention, in addition to the first feature, an oil supply passage through which an oil discharged from an oil pump disposed in the crankcase is led to the side of a cylinder block may be provided in the crankcase, and an oil jet hole for jetting the oil toward the side of the crank pin and the piston may be provided in the crankcase in the state of being communicated directly to an intermediate portion of the oil supply passage.

With the second feature, the oil jet hole is provided in the crankcase so as to be communicated directly to the oil supply passage provided in the crankcase for supplying the oil, jetted from the oil pump, toward the cylinder block side from the crankcase. Therefore, for jetting the oil toward the side of the crank pin and the piston, it suffices to provide the crankcase with the oil jet hole, and no special component parts are required. Thus, it is possible to jet the oil using a simple and inexpensive structure, and to contrive a reduction in the weight of the engine.

According to a third aspect and feature of the present invention, in addition to the second feature, the oil jet hole may be provided in the crankcase on the upper side of the crankshaft. With the above feature, the jetting of the oil from the upper side eliminates the need to set a comparatively high oil jet pressure, thereby making it possible to set the discharge pressure of the oil pump to a comparatively low level, and to contrive a reduction in the size of the oil pump.

According to a fourth aspect and feature of the present invention, in addition to the second or third feature, the crankcase may comprise a pair of case halves mutually coupled, at least one of both the case halves may be provided with an oil passage groove for forming an oil passage constituting a part of the oil supply passage between coupling surfaces of both the case halves, and the oil jet hole may be formed between the coupling surfaces of both the case halves in the state of being communicated to the oil passage groove. With the above feature, the working to be applied to the crankcase for the purpose of ejecting the oil can be facilitated.

According to a fifth aspect and feature of the present invention, in addition to any of the second to fourth features, the oil supply passage may be provided in the crankcase so that the oil supply passage passes through the vicinity of the crank pin at least at its portion communicated to the oil jet hole. With the above feature, the oil jet hole can be disposed close to the crank pin, and the jet pressure from the oil jet hole can be set at a comparatively low level, so that a reduction in the size of the oil pump can be contrived.

According to a sixth aspect and feature of the present invention, in addition to the fifth feature, the oil jet hole may be disposed within the range surrounded by a pair of vertical lines passing respectively through the left and right ends of a rotational locus of a portion farthest from the axis of the crankshaft of an outer periphery of a large end portion of the connecting rod, a horizontal line passing through the uppermost end of the rotational locus, and the rotational locus, as viewed on a projection onto a plane orthogonal to the axis of the crankshaft. With the above feature, the oil can be jetted from an upper position close to the crank pin, the discharge pressure of the oil pump can be further lowered, and a reduction in the size of the oil pump can be contrived.

According to a seventh aspect and feature of the present invention, in addition to any of the second to sixth features, a plurality of the oil jet holes may be provided in the crankcase in the state of being communicated directly to intermediate portions of the oil supply passage. With the above feature, the portions in a wide range inclusive of the crank pin and the piston can be lubricated with a simple structure.

According to an eighth aspect and feature of the present invention, in addition to the first feature, an engine main body including the crankcase may be mounted on a vehicle body frame of an engine-assisted bicycle on the front side of a rear wheel in such a posture as to have a cylinder axis inclined forwardly upwards with a cam chain chamber provided on the left side of the cylinder axis, the cam chain chamber housing a cam chain wrapped around the wrapping driving wheel for transmitting power from the crankshaft to a camshaft of the valve-operating device; a chain for transmitting tread forces from crank pedals rotatably borne on the vehicle body frame on the front side of the engine main body to the rear wheel may be disposed on the right side of the engine main body; a power transmission unit for transmitting the power from the crankshaft to the rear wheel through speed change may be contained in a case disposed on the left side of the rear wheel so as to bulge toward the left side from the crankcase; and an oil injection port communicated with the cam chain chamber may be provided in a left side surface of the engine main body on the front side of the crankcase.

With the eighth feature, the left side surface of the engine main body on the front side of the crankcase is at a above feature, the portions in a wide range inclusive of the crank pin and the piston can be lubricated with a simple structure.

According to an eighth aspect and feature of the present invention, in addition to the first feature, an engine main body including the crankcase is mounted on a vehicle body frame of an engine-assisted bicycle on the front side of a rear wheel in such a posture as to have a cylinder axis inclined forwardly upward with a cam chain chamber provided on the left side of the cylinder axis, the cam chain chamber housing a cam chain wrapped around the wrapping driving wheel for transmitting power from the crankshaft to a camshaft of the valve-operating device; a chain for transmitting tread forces from crank pedals rotatably borne on the vehicle body frame on the front side of the engine main body to the rear wheel is disposed on the right side of the engine main body; a power transmission unit for transmitting the power from the crankshaft to the rear wheel through speed change is contained in a case disposed on the left side of the rear wheel so as to bulge toward the left side from the crankcase; and an oil injection port communicated with the cam chain chamber is provided in a left side surface of the engine main body on the front side of the crankcase.

With the eighth feature, the left side surface of the engine main body on the front side of the crankcase is at a position receded inwards as compared with the case, so that, by providing the oil injection port in this portion, the oil injection port can be laid out while obviating an increase in the size of the engine main body in the direction along the axis of the crankshaft and obviating the interference with component parts present in the surroundings of the engine main body. Moreover, the cam chain chamber communicated with the oil injection port is inclined with the crankcase side at a lower position, attendant on the forwardly upward inclination of the engine main body, so that the oil injected through the oil injection port into the cam chain chamber can be made to flow smoothly toward the crankcase side.

The above and other objects, features and advantages of the invention will become apparent from the following description of the preferred embodiments taken in conjunction with the accompanying drawings.

### BRIEF DESCRIPTION OF THE DRAWINGS

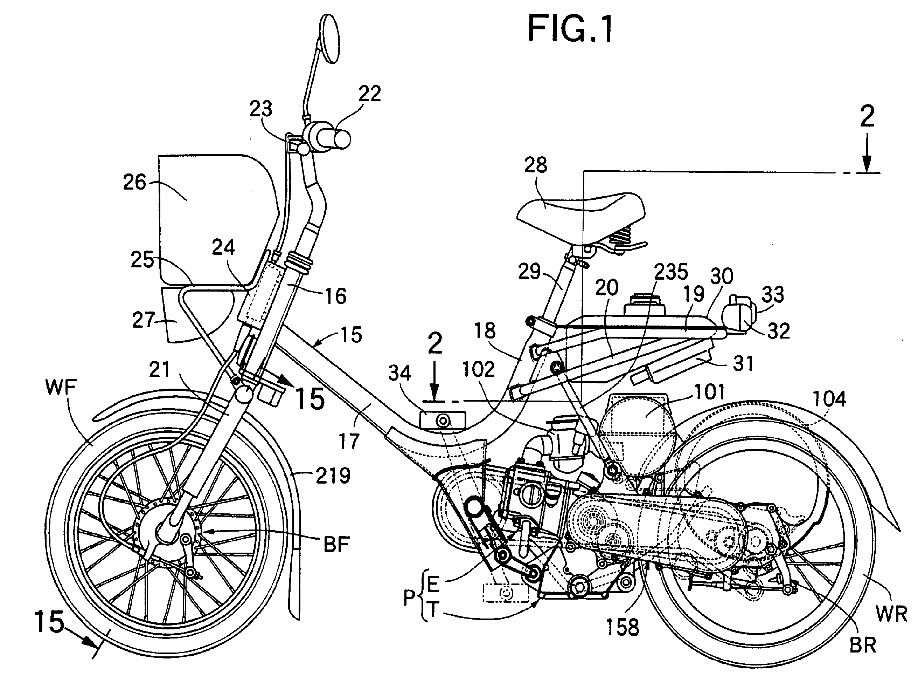

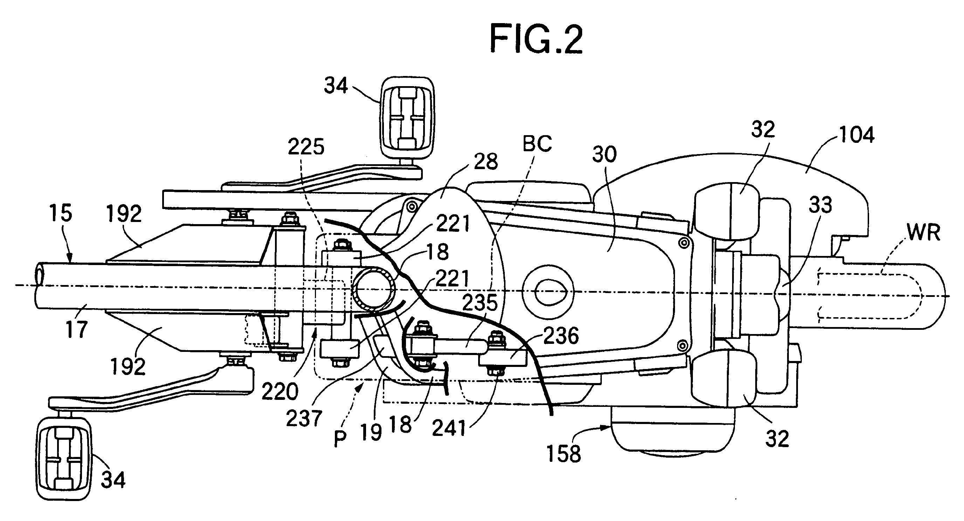

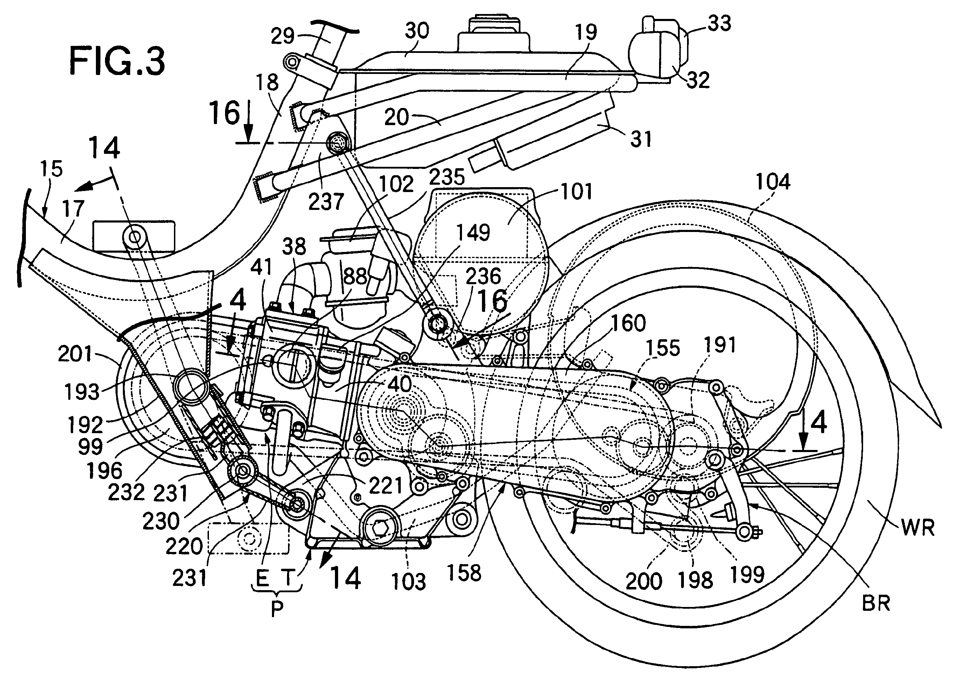

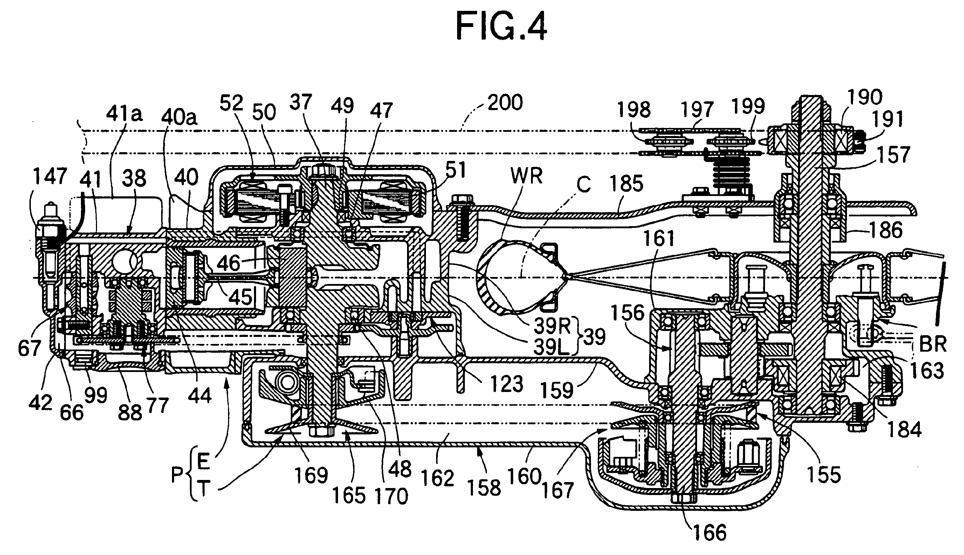

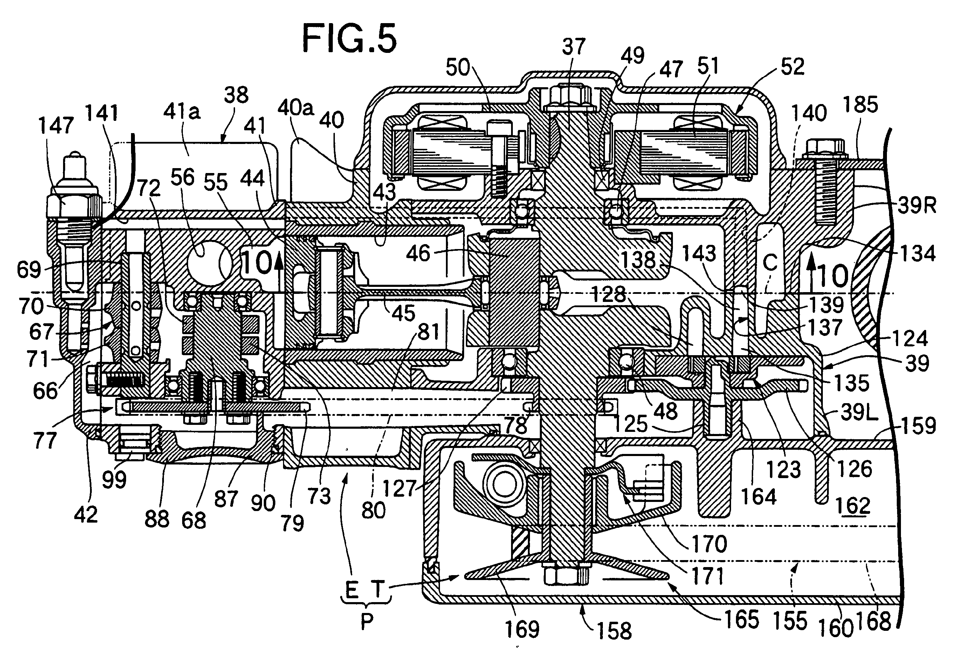

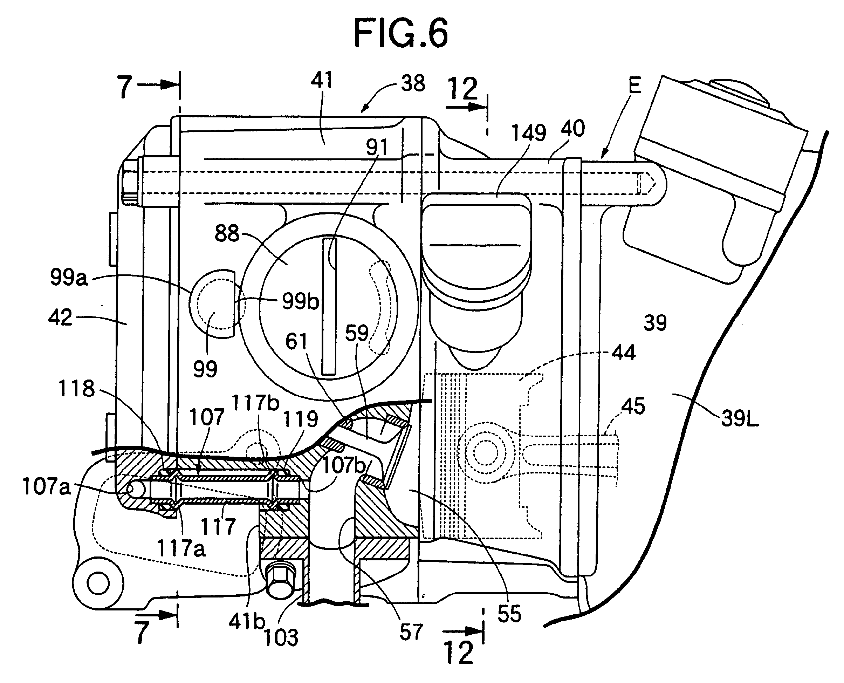

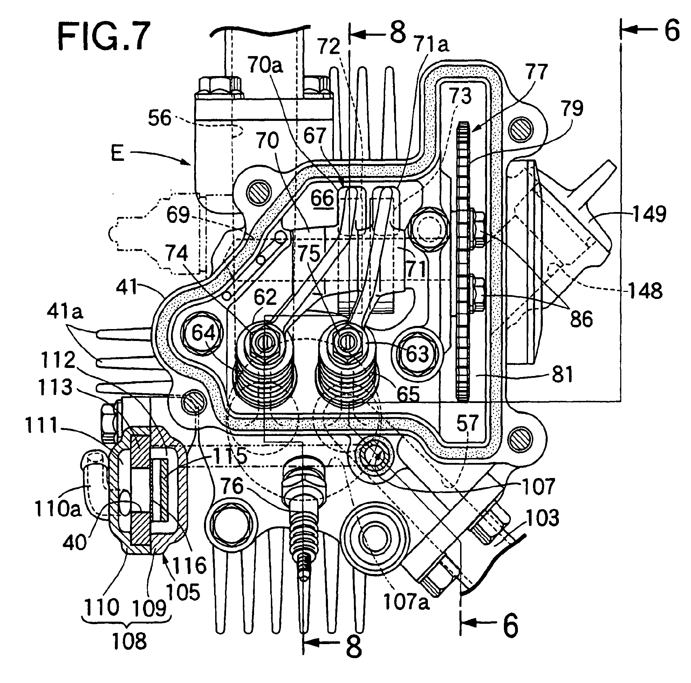

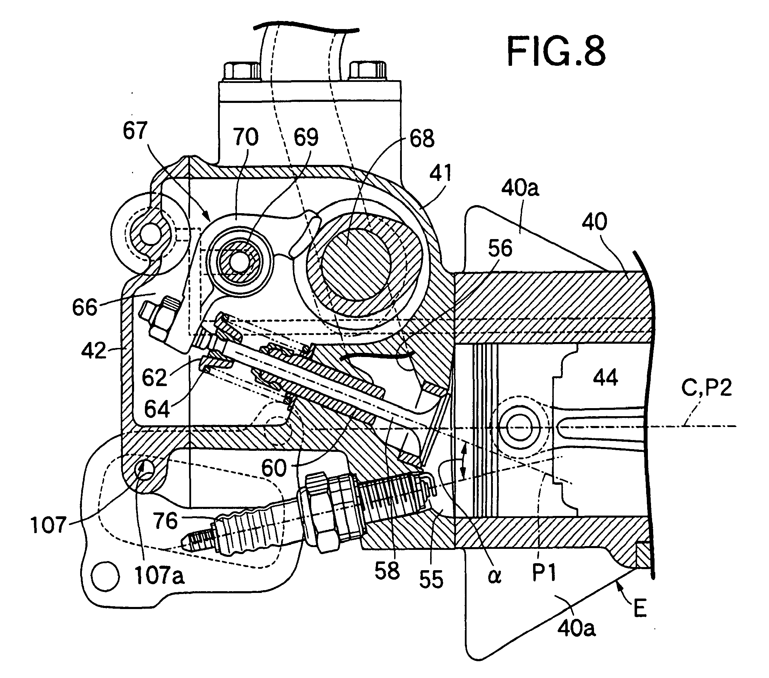

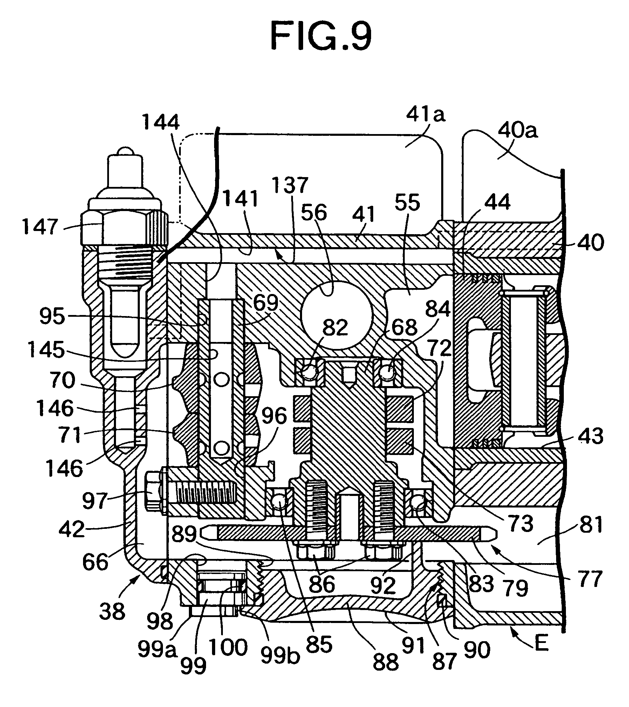

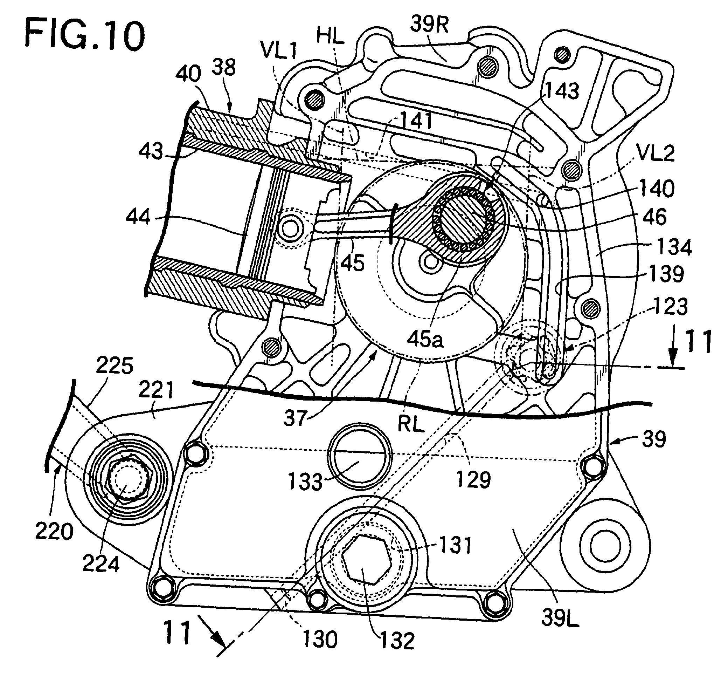

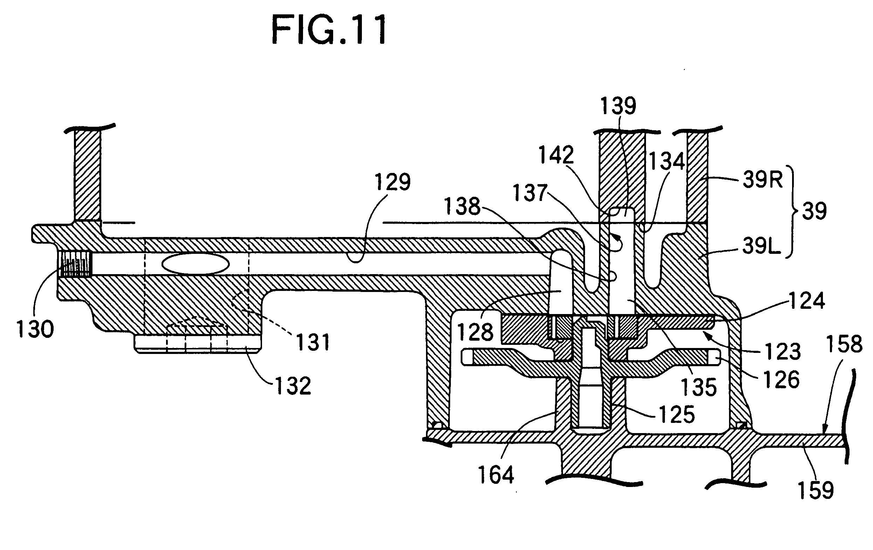

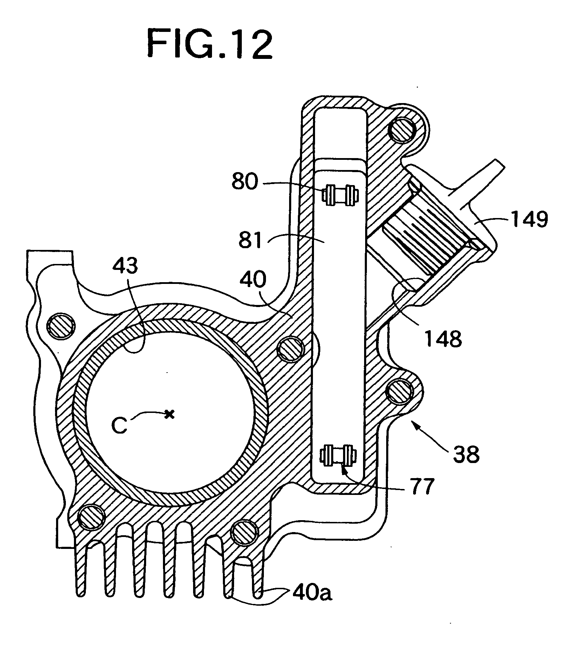

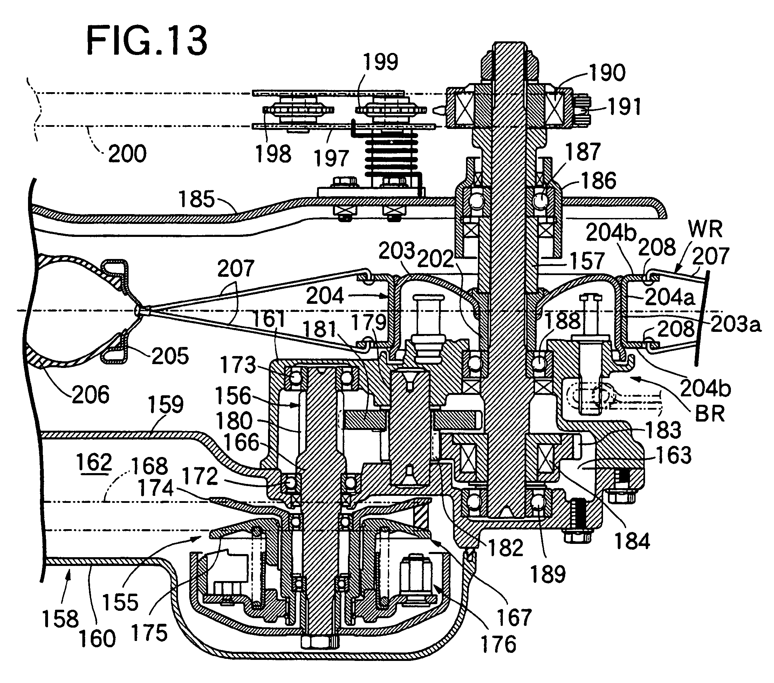

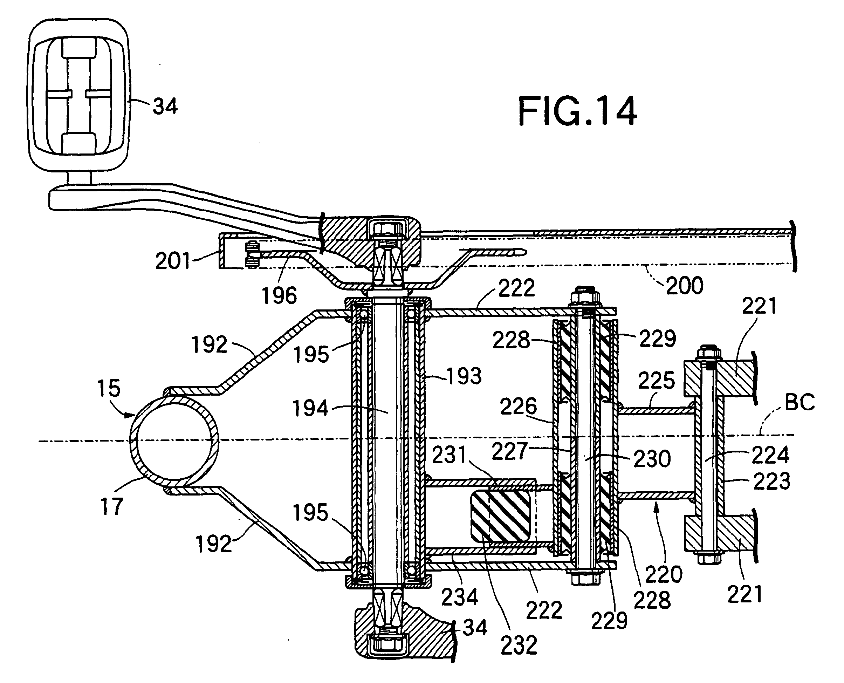

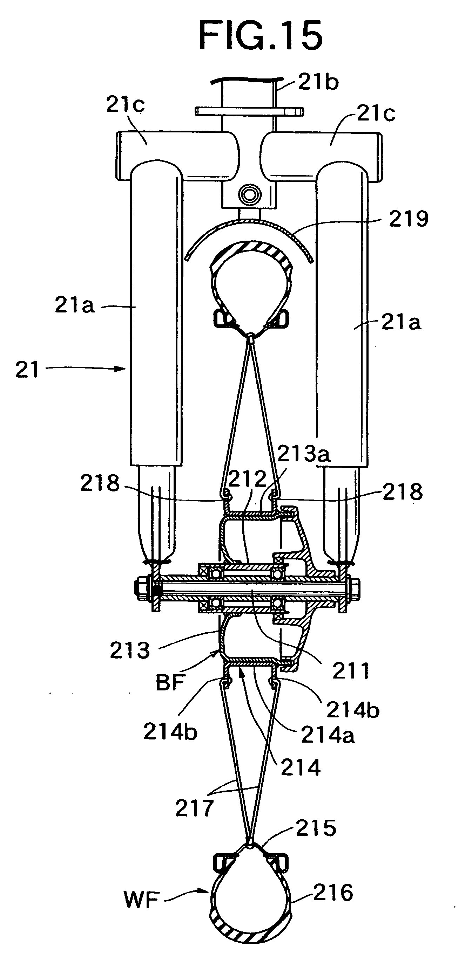

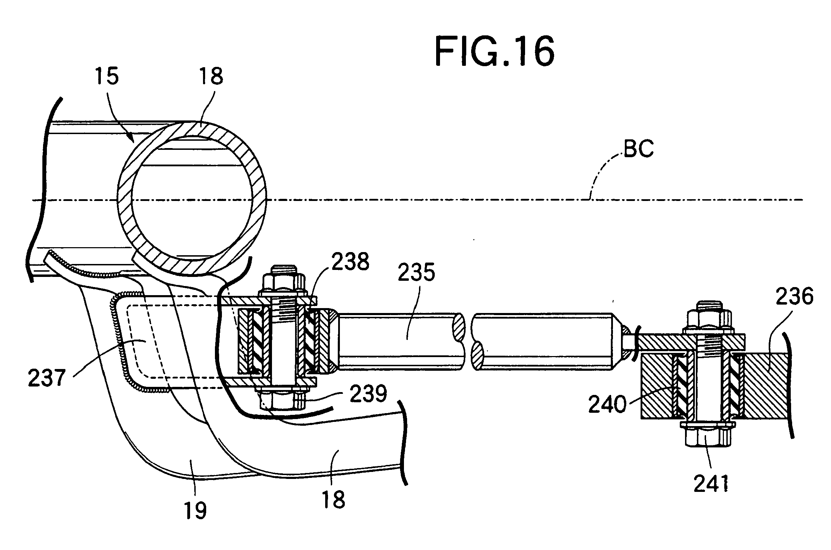

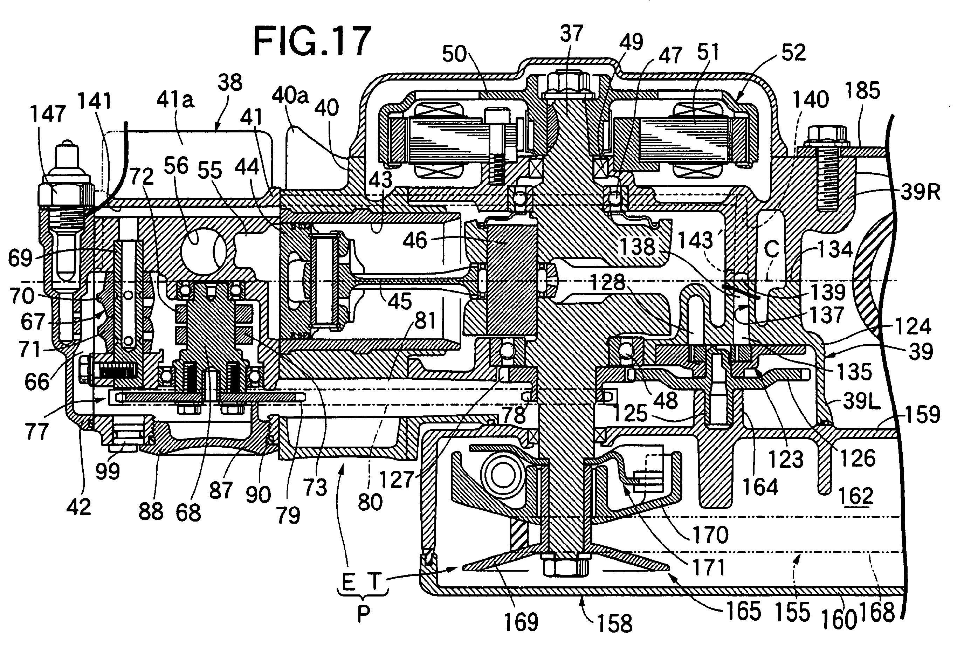

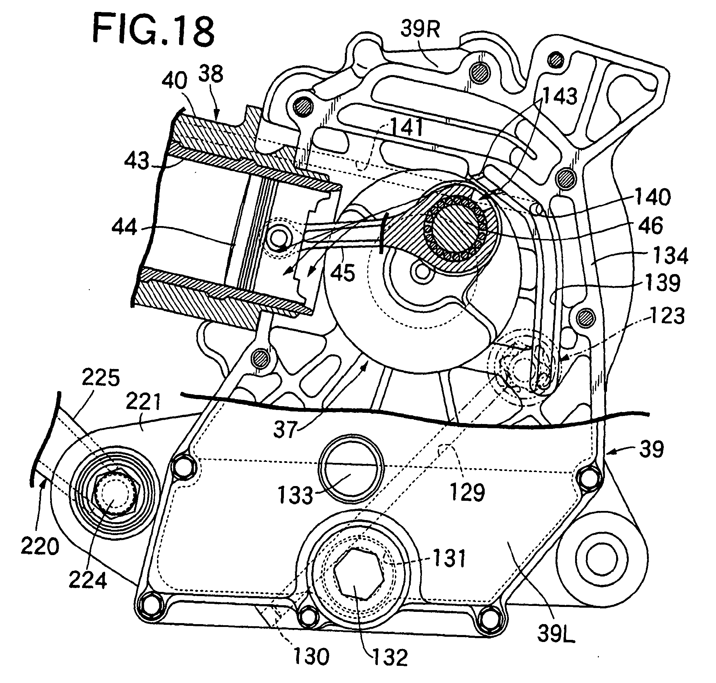

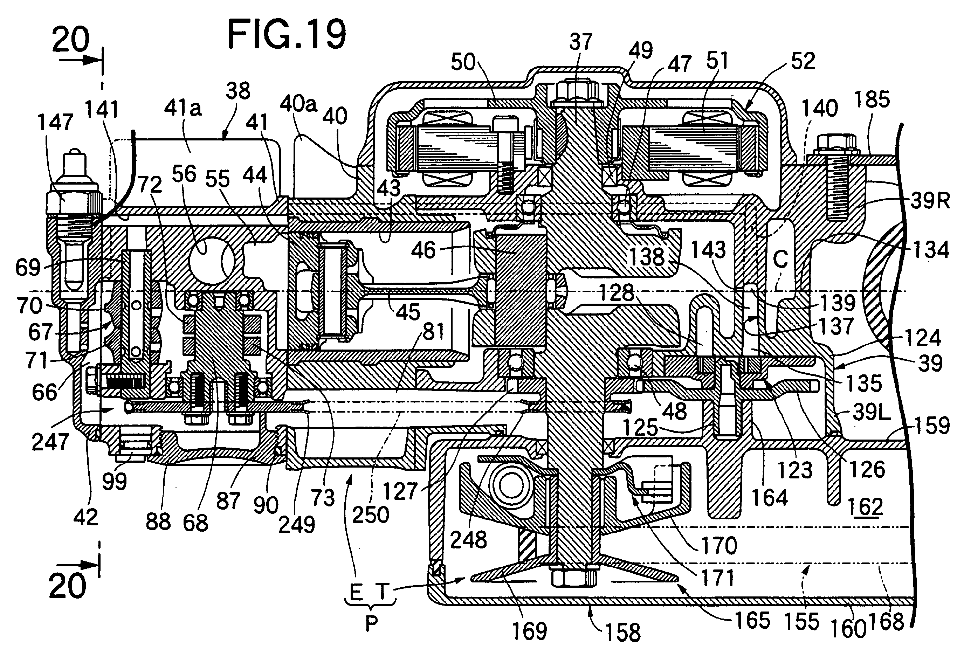

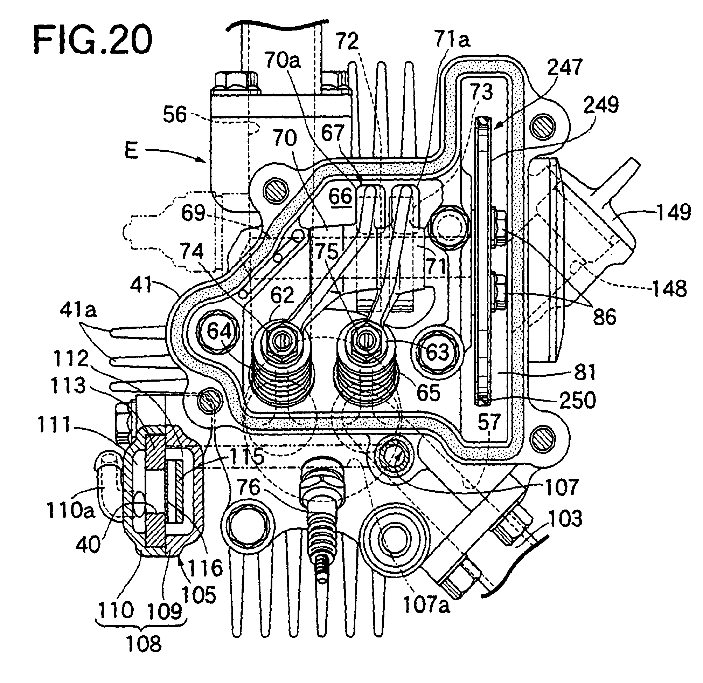

Figs.1 to 16 illustrate a first embodiment of the present invention, in which Fig.1 is a side view of an engine-assisted bicycle; Fig.2 is a cross-sectional plan view of a rear portion of the bicycle taken along line 2-2 of Fig.1; Fig.3 is an enlarged side view of a rear portion of the bicycle; Fig.4 is a sectional view taken along line 4-4 of Fig.3; Fig.5 is an enlarged view of a front portion of Fig.4; Fig.6 is an enlarged cutout side view of an front portion of an engine main body and is a sectional view taken along line 6-6 of Fig.7; Fig.7 is a sectional view taken along line 7-7 of Fig.6; Fig.8 is a sectional view taken along line 8-8 of Fig.7; Fig.9 is an enlarged view of an essential part of Fig.5; Fig.10 is a sectional view taken along line 10-10 of Fig.5; Fig.11 is a sectional view taken along line 11-11 of Fig.10; Fig.12 is a sectional view taken along line 12-12 of Fig.6; Fig.13 is an enlarged view of a rear portion of Fig.4; Fig.14 is an enlarged sectional view taken along line 14-14 of Fig. 3; Fig. 15 is a sectional view taken along line 15-15 of Fig.1; Fig.16 is a sectional view taken along line 16-16 of Fig.3; Fig.17 is a sectional view corresponding to Fig.5, according to a second embodiment; Fig.18 is a sectional view corresponding to Fig.5. according to a third embodiment; Fig.19 is a sectional view corresponding to Fig.5, according to a fourth embodiment; and Fig.20 is a sectional view taken along line 20-20 of Fig.19.

### BEST MODE FOR CARRYING OUT THE INVENTION

The present invention will now be described by way of preferred embodiments with reference to the accompanying drawings.

A first embodiment of the present invention will first be described referring to Figs. 1 to 16. In Fig. 1, a vehicle body main frame 15 of the engine-assisted bicycle comprises a main frame 17 provided with a head pipe 16 at its front end and inclined rearwardly downwards, a seat post 18 integrally connected to a rear portion of the main frame 17 and extending upwards, a support stay 19 formed in a substantially U shape opened to the front side and having both ends attached to the seat post 18, and reinforcing members 20··· extending rearwardly upwards from the seat post 18 so as to connect between the left and right sides of the support stay 19··· and the seat post 18.

A front fork 21 is steerably borne on the head pipe 16, a front wheel WF is shaft-supported on the lower ends of the front fork 21, and a bar form steering handle 22 is provided at the upper end of the front fork 21. Namely, the front fork 21 and the steering handle 22 are steerably borne on the head pipe 16.

Brake levers 23··· are steerably disposed respectively at both left and right end portions of the steering handle 22, and operating forces on the brake levers 23··· are inputted to an equalizer 24 disposed on the front side of the head pipe 16 and supported by the head pipe 16. The equalizer 24 is so constructed that, whichever of the left and right brakes 23··· may be operated, a brake operating force is transmitted to both of a front wheel brake BF mounted to the front wheel WF and a rear wheel brake BR mounted to a rear wheel WR. In addition, a basket 26 disposed on the front side of the steering handle 22 and the head pipe 16 and a head lamp 27 disposed on the lower side of the basket 24 are borne on a basket support member 25 provided between an upper portion of the front fork 21 and the steering handle 22.

Referring to Figs. 2 and 3 also, a seat support pipe 29 provided at its upper end with a saddle form seat 28 for mounting the driver thereon is inserted into the seat post 18 from above, and the seat support pipe 29 is fixed to the seat post 18 so that the vertical position thereof can be adjusted.

A fuel tank 30 disposed on a skewly rear lower side of the seat 28 is supported on the support stay 19, and an electronic control unit 31 for controlling the operation of an engine E mounted on the vehicle body frame 15 is attached to the lower surface of the fuel tank 30. In addition, a left-right pair of rear winkers 32, 32 and a rear lamp 33 disposed between the rear winkers 32, 32 are attached to a rear portion of the support stay 19.

A power unit P comprising a four-cycle SOHC type engine E and a power transmission unit T for transmitting the output of the engine E to the rear wheel WR through speed change is vertically oscillatably borne on a rear portion of the vehicle body frame 15, and an axle of the rear wheel WR is shaft-supported on a rear portion of the power unit P. The power generated when the driver on the seat 28 steps in a left-right pair of crank pedals 34··· can also be transmitted to the rear wheel WR.

In Figs. 4 and 5, the engine E is a single-cylinder air-cooled type engine comprising a crankshaft 37 extending horizontally in the left-right direction with respect to the vehicle body frame 15. An engine main body 38 of the engine E comprises a crankcase 39 rotatably bearing the crankshaft 37, a cylinder block 40 connected to a crankcase 39 while having a cylinder axis C extending slightly forwardly upwards from the crankcase 39, a cylinder head 41 connected to the cylinder block 40, and a head cover 42 connected to the cylinder head 41 on the side opposite to the cylinder block 40. A plurality of cooling fins 40a··· and a plurality of cooling fins 41a··· are projected respectively on the outside surfaces of the cylinder block 40 and the cylinder head 41.

The crankcase 39 is comprised of a left-right pair of case halves 39L and 39R mutually coupled at coupling surfaces 134 along a vertical plane containing the cylinder axis C, and the crankshaft 37 is borne on the case half 39R through a ball bearing 47 and is borne on the case half 39L through a ball bearing 48. A piston 44 slidably fitted in a cylinder bore 43 provided in the cylinder block 40 is connected to the crankshaft 37 through a connecting rod 45 and a crank pin 46. In addition, an annular seal member 49 is provided between the crankshaft 37 and the case half 39R on the outer side of the ball bearing 47.

Moreover, one end portion of the crankshaft 37 is projected from the crankcase 39 on the right side as viewed in the running direction of the engine-assisted bicycle, and an AC generator 52 is connected to the one end portion of the crankshaft 37. The AC generator 52 is comprised of a rotor 50 fixed to the one end portion of the crankshaft 37, and a stator 51 contained in the rotor 50. The AC generator 52 is covered with a right engine cover 53 connected to the crankcase 39 and the cylinder block 40, and the stator 51 is fixed to the crankcase 39.

Referring to Figs. 6 to 8 also, the cylinder head 41 is provided with an intake port 56 and an exhaust port 57 which are communicated to a combustion chamber 55 formed between the cylinder block 40 and the cylinder head 41 so that a top portion of the piston 44 fronts on the combustion chamber 55, and, further, an intake valve 58 and an exhaust valve 59 for opening and closing the intake port 56 and the exhaust port 57 respectively are arranged.

The intake valve 58 and the exhaust valve 59 perform rectilinear opening and closing operations while being guided by guide cylinders 60 and 61 provided in the cylinder head 41. Valve springs 64 and 65 are provided respectively between retainers 62, 63 provided at end portions of the intake valve 58 and the exhaust valve 59 projected from the guide cylinders 60, 61 and the cylinder head 41. The intake valve 58 and the exhaust valve 59 are spring-biased in the valve-closing directions by the valve springs 64 and 65, respectively.

Moreover, the guide cylinders 60 and 61 are provided in the cylinder head 41 while having their axes parallel to each other and directed forwardly upwards so that the plane P1 containing the axes of the guide cylinders 60 and 61 in common intersects at an acute angle with the plane P2 containing the axis of the crankshaft 37 and the cylinder axis C. The intake valve 58 and the exhaust valve 59 are disposed in the cylinder head 41 so that they are operated in the opening and closing operation directions which are parallel to each other.

A valve-operating chamber 66 is formed between the cylinder head 41 and the head cover 42, and a valve-operating device 67 for drivingly opening and closing the intake valve 58 and the exhaust valve 59, which are spring-biased in the valve-closing directions, is contained in the valve-operating chamber 66.

The valve-operating device 67 comprises a camshaft 68 having an axis parallel to the crankshaft 37 and being rotatably borne on the cylinder head 41, a rocker shaft 69 having an axis parallel to the camshaft 68 and being fixedly supported by the cylinder head 41, an intake-side rocker arm 70 oscillatably borne on the rocker shaft 69 and interposed between the camshaft 68 and the intake valve 58, and an exhaust-side rocker arm 71 oscillatably borne on the rocker shaft 69 together with the intake-side rocker arm 70 and interposed between the camshaft 68 and the exhaust valve 59.

The camshaft 68 is provided with an intake-side cam 72 and an exhaust-side cam 73. The intake-side rocker arm 70 is provided at its one end with a cam slipper 70a making sliding contact with the intake-side cam 72, and a tappet screw 74 making contact with an end portion of the intake-valve 58 is screwed to the other end portion of the intake-side rocker arm 70 so that its advanced/retracted position can be adjusted. Similarly, the exhaust-side rocker arm 71 is provided at its one end with a cam slipper 71a making sliding contact with the exhaust-side cam 73, and a tappet screw 75 making contact with an end portion of the exhaust valve 59 is screwed to the other end portion of the exhaust-side rocker arm 71 so that its advaneed/detracted position can be adjusted.

Meanwhile, the camshaft 68 is disposed closer to the combustion chamber 55 than the conjunction/connection points between the intake-side and exhaust side rocker arms 70, 71 and the intake valve 58 and the exhaust valve 59, namely, the points of contact of the tappet screws 74, 75 with the intake valve 58 and the exhaust valve 59; in this embodiment, the camshaft 68 is disposed on the upper side of the intake valve 58 and the exhaust valve 59.

Moreover, the intake port 56 is disposed at a position spaced away from one end in the axial direction of the camshaft 68 so that it overlaps with at least a part (a part, in this embodiment) of the camshaft 68 as viewed on a projection (see Fig. 8) onto a plane orthogonal to the axis of the camshaft 68, and is provided in the cylinder head 41 so as to intersect with the rocker shaft 69 as viewed on a projection (see Fig. 7) onto a plane orthogonal to the cylinder axis C.

As is clearly shown in Fig. 7, the opening ends of the intake port 56 and the exhaust port 57 into the combustion chamber 55 are arranged on a straight line parallel to the axes of the camshaft 68 and the rocker shaft 69, the outer end of the intake port 56 is opened in an upper portion side wall of the cylinder head 41, and the outer end of the exhaust port 57 is opened in a lower portion side wall of the cylinder head 41.

In addition, a spark plug 76 having an axis at an acute angle α against the plane P1 containing the axes of the intake valve 58 and the exhaust valve 59 in common is attached to the cylinder head 41 so as to front on the combustion chamber 55.

A timing transmission mechanism 77 for transmitting the rotating force of the crankshaft 37 to the camshaft 68 at a speed reduction ratio of 1/2 is provided between the camshaft 68 and the crankshaft 37. The timing transmission mechanism 77 comprises a driving sprocket 78 fixed to the crankshaft 37 on the outer side of the ball bearing 48, a driven sprocket 79 fixed to the other end portion of the camshaft 68, and an endless form cam chain 80 wrapped around the driving and driven sprockets 78 and 79. At the portion ranging from the crankcase 39 through the cylinder block 40 and the cylinder head 41 to the head cover 42, a timing transmission chamber 81 in which the cam chain 80 is travelably contained is formed in the engine main body 38 so as to be located on the left side of the cylinder axis C.

In Fig. 9, the cylinder head 41 is provided with a circular first support recessed portion 82 for containing one end portion of the camshaft 68, and a first support hole 83 for passing the camshaft 68 therethrough, coaxially. The first support hole 83 is formed with such a large diameter that the intake-side cam 72 and the exhaust-side cam 73 provided on the camshaft 68 can be passed therethrough. Moreover, a ball bearing 84 is interposed between the inside surface of the first support recessed portion 82 and the outside surface of one end portion of the camshaft 68, and a ball bearing 85 is interposed between the inside surface of the first support hole 83 and the outside surface on the other end side of the camshaft 68. The driven sprocket 79 is coaxially fastened to the other end of the camshaft 68 on the outer side of the ball bearing 85 by a plurality of bolts 86 ···.

A side wall of the cylinder head 41, in this embodiment the left side wall of the cylinder head 41 as viewed from a person directed forwards with respect to the engine-assisted bicycle, is provided with a first assembly opening portion 87 which makes it possible to assemble the camshaft 68 onto the cylinder head 41 and to attach the driven sprocket 79 to the camshaft 68, the first assembly opening portion 87 being larger in diameter than the first support hole 83. The first assembly opening portion 87 is closed with a first cover member 88. The first cover member 88 is fixed to the cylinder head 41 by screwing it to a female screw 89 provided at the first assembly opening portion 87, and an annular seal member 90 is clamped between the outer end of the first assembly opening portion 87 and the first cover member 88.

Moreover, the outside surface of the first cover member 88 is provided with an engaging groove 91 for engaging a tool therein at the time of rotating the first cover member 88, along a diametral line. In addition, the inside surface of the first cover member 88 is provided thereon with a restrictive projected portion 92 projected to the side of the driven sprocket 79, and the driven sprocket 79 makes sliding contact with the restrictive projected portion 92, whereby the camshaft 68 is inhibited from slipping off to the side of the first assembly opening portion 87.

The cylinder head 41 is provided with a circular second support recessed portion 95 for fitting therein and supporting one end portion of the rocker shaft 69, and a second support hole 96 for passing therethrough and supporting the other end portion of the rocker shaft 69, coaxially. A bolt 97 is screwed to the cylinder head 41 an the rocker shaft 69 at a portion corresponding to the second support hole 96, whereby the rocker shaft 69 is fixedly supported on the cylinder head 41.

The left side wall of the cylinder head 41 is provided with a second assembly opening portion 98 for making it possible to assemble the rocker shaft 69 onto the cylinder head 41 from the side of the left side wall, the second assembly opening portion 98 being roughly equal to the second support hole 96 in diameter. The second assembly opening portion 98 is closed with a second cover member 99, which is air-tightly fitted in the second assembly opening portion 98 while being inhibited from moving to the inner side in the axial direction. Specifically, the second cover member 99 provided at its outer end with a flange portion 99a for engagement with the outer end circumferential edge of the second assembly opening portion 98 is fitted in the second assembly opening portion 98, with an annular seal member 100 attached to the outer circumference thereof.

Moreover, the flange portion 99a is provided with a cutout 99b for engagement of a part of the first cover member 88 with the second cover member 99 from the outer side. With the first member 88 turningly fitted into the first assembly opening portion 87 after fitting of the second cover member 99 into the second assembly opening portion 98, the fixation of the first cover member 88 to the cylinder head 41 and the fixation of the second cover member 99 to the cylinder head 41 are simultaneously achieved.

An air cleaner 101 disposed on the upper side of the power unit P and supported by the power unit P is connected to the intake port 56 opened in an upper side surface of the cylinder head 41, via a carburetor 102. In addition, an exhaust muffler 104 disposed on the right side of the rear wheel WR is connected to the rear end of an exhaust pipe 103 which is connected to the exhaust port 57 opening in a lower side surface of the cylinder head 41 and which is extended rearwards.

Meanwhile, the exhaust port 57 is supplied with secondary air for clarifying the exhaust gas. A reed valve 105 is provided at a right front portion of the head cover 42 in the engine main body 38, the upstream side of the reed valve 105 is connected to the air cleaner 101 through a hose (not shown), and the downstream side of the reed valve 105 is connected to the exhaust port 57 through a secondary air supply passage 107.

A valve housing 108 of the reed valve 105 is comprised of a housing main portion 109 integral with the head cover 42, and a cover 110 fastened to the housing main body 109. A valve seat plate 113 for partitioning the inside of the valve housing 108 into an upstream chamber 111 on the side of the cover 110 and a downstream chamber 112 on the side of the housing main portion 109 is clamped between the housing main portion 109 and the cover 110, and the valve seat plate 113 is provided with a valve hole 114 for connection between the upstream chamber 111 and the downstream chamber 112.

A stopper plate 115 spaced from the valve seat plate 113 at a portion fronting on the valve hole 114 and one end of a reed 116 capable of making contact with the valve seat plate 113 so as to close the valve hole 114 are co-fastened to a surface of the valve seat plate 113 fronting on the side of the downstream chamber 112.

The downstream end of a hose (not shown) is connected to a connection pipe portion 110a provided integrally with the cover 110, and the upstream end of the hose is connected to the air cleaner 101.

The secondary air supply passage 107 is comprised of a first passage portion 107a provided in the head cover 42 in the state of being communicated with the downstream chamber 112, and a second passage portion 107b provided in the cylinder head 41 in the state of being communicated with the exhaust port 57, which are connected to each other through a secondary air supply pipe 117 whose outside surface is exposed to the atmosphere. Namely, a part of the secondary air supply passage 107 is composed of the secondary air supply pipe 117.

A projected portion 41b projected downwards is provided at a part of the cylinder head 41 at a portion forming the exhaust port 57, and a lower portion 42 of the head cover 42 is projected downwards from a side surface of the cylinder head 41 on the side of the head cover 42 so as to correspond to the projected portion 41b of the cylinder head 41. The head cover 42 is provided with the first passage portion 107a whose upstream end is communicated to the downstream chamber of the reed valve 105 so that the downstream end of the first passage portion 107a is opened toward the projected portion 41b of the cylinder head 41. The second passage portion 107b is provided in the projected portion 41b of the cylinder head 41 so that its upstream end is opposed to an opening end on the downstream side of the first passage portion 107a and its downstream end is opened into the exhaust port 57.

The secondary air supply pipe 117 is clamped between the projected portion 41b of the cylinder head 41 and a lower portion of the head cover 42, and both ends of the secondary air supply pipe 117 are fitted in a downstream end opening portion of the first passage portion 107a and an upstream end opening portion of the second passage portion 107b.

O-rings 118 and 119 are interposed respectively between both end outside surfaces of the secondary air supply pipe 117 and the head cover 42 and the cylinder head 41 in the engine main body 38, namely, between both end outside surfaces of the secondary air supply pipe 117 and the inside surface of a downstream end opening portion of the first passage portion 107a and the inside surface of an upstream end opening portion of the second passage portion 107b. The secondary air supply pipe 117 is provided at its both end portion with diametrally enlarged portions 117a and 117b for clamping the O-rings 118 and 119 between the secondary air supply pipe 117 and the head cover 42 and the cylinder head 41.

Meanwhile, the engine main body 38 is mounted on the motorcycle in such a posture that the secondary air supply pipe 117 fronts on the front side in the running direction of the motorcycle and that the reed valve 105 and the first passage portion 107a provided in the head cover 42 so as to connect between the reed valve 105 and the secondary air supply pipe 117 front on the front side in the running direction of the motorcycle. In order to ensure that the running airflow effectively impinges on the secondary air supply pipe 117, in this embodiment, the engine main body 38 is mounted on the vehicle body frame 15 so that the secondary air supply pipe 117 is disposed on the front lower side of the engine main body 38.

Referring to Figs. 10 and 11 also, an oil pump 123 for sucking up the oil from a lower portion of the inside of the crankcase 39 is disposed in the crankcase 39. Specifically, a pump case 124 of the oil pump 123 is connected to the outside surface side of the case half 39L of the crankcase 39 in the vicinity of the ball bearing 48 interposed between the case half 39L and the crankshaft 37.

A driven gear 126 is integrally provided on an input shaft 125 of the oil pump 123, and a driving gear 127 meshed with the driven gear 126 is formed as one body with the driving sprocket 78 fixed to the crankshaft 37 so as to constitute a part of the timing transmission mechanism 77. Namely, the oil pump 123 performs a pump action according to the rotation of the crankshaft 37. Moreover, the driving sprocket 78 is disposed on the outer side of the driving gear 127, which is disposed on the outer side of the ball bearing 48.

The case half 39L of the crankcase 39 is provided with a suction passage 129 extending slantly vertically while having its upper end connected to a suction port 128 of the oil pump 123, and a lower end opening portion of the suction passage 129 is closed with a plug member 130. The case half 39L is provided at its lower portion with a drain hole 131 for draining the oil present in the crankcase 39 in such a manner as to intersect with a part of the suction passage 129, and the drain hole 131 is openably closed with a drain plug 132 so as not to close the opening end of the suction passage 129 into the drain hole 131.

In addition, on the upper side of the drain plug 132, the case half 39L is provided with a level indication window 133 for checking the oil surface level in the crankcase 39.

An oil supply passage 137 extending from the crankcase 39 through the cylinder block 40 and the cylinder head 41 to the head cover 42 is communicated with a discharge port 135 of the oil pump 123.

The oil supply passage 137 comprises an oil passage 138 provided in the case half 39L so as to extend from the discharge port 135 to the coupling surfaces 134 of both the case halves 39L and 39R, an oil passage 139 formed between the coupling surfaces 134 of both the case halves 39L and 39R and communicated to the oil passage 138, an oil passage 140 provided in the crankcase 39R so as to extend in parallel to the axis of the crankshaft 37 and having one end communicated to an intermediate portion of the oil passage 139, and an oil passage 141 provided in the case halves 39R, the cylinder head 40 and the head cover 41 so as to have one end communicated to the other end of the oil passage 140.

The oil passage 139 is composed of an oil passage groove 142 provided in the case half 39R so as to front on the coupling surfaces 134 and the case half 39L, and is formed in an arcuate shape so as to extend around the upper side of the crankshaft 37.

In addition, an oil jet hole 143 for jetting the oil toward the back side of the piston 44 and the crank pin 46 which is a connection portion between the connecting rod 45 and the crankshaft 37 is provided in the crankcase 39 in the state of being communicated with an intermediate portion of the oil supply passage 137, and the oil jet hole 143 is formed between the case halves 39L and 39R so as to be communicated to the oil passage 139 of the oil supply passage 137 on the upper side of the crankshaft 37. Namely, the oil jet hole 143 is formed between both the case halves 39L and 39R by providing a groove in the case half 39R at the coupling surfaces 134 so as to provide communication with the oil passage groove 142.

Moreover, of the oil supply passage 137, the portion communicated with the oil jet hole 143, namely, the oil passage 139 is provided in the crankcase 39 so as to pass through the vicinity of the crank pin 46. As shown in Fig. 10, the oil jet hole 143 is disposed within the range surrounded by a pair of vertical lines VL1 and VL2 passing respectively both left and right ends of a rotational locus RL of a portion farthest from the axis of the crankshaft 37 of the outer circumference of a large end portion 45a of the connecting rod 45, a horizontal line HL passing through the uppermost end of the rotational locus RL, and the rotational locus RL, as viewed on a projection onto a plane orthogonal to the axis of the crankshaft 37.

The cylinder head 41 and the rocker shaft 69 are provided with passages 144 and 145 communicated to the oil passage 141 of the oil supply passage 137, for lubrication between the rocker shaft 69 and the intake-side and exhaust-side rocker arms 70, 71. In addition, the head cover 42 is provided with a plurality of oil jet holes 146··· for jetting the oil toward sliding contact portions between the intake-side and exhaust-side cams 72, 73 and the cam slippers 70a, 71a of the intake-side and exhaust-side rocker arms 70, 71, in such a manner that the oil jet holes 146 ··· are communicated with the downstream end of the oil passage 141.

Besides, a temperature sensor 147 for detecting the temperature of the oil as a temperature representative of the engine temperature is attached to the head cover 42 so as to front on a downstream portion of the oil passage 141.

In addition, as shown in Fig. 12, the left side surface on the front side of the crankcase 39 of the engine main body 38, in this embodiment the left side surface of the cylinder block 40 on the back side of the first cover member 88, is provided with an oil injection port 148 for supplying the oil into the crankcase 39 so that the oil injection port 148 is communicated with the timing transmission chamber 81. The oil injection port 148 is closed with a detachable oil supply cap 149.

Referring to Fig. 13 also, the power transmission unit T comprises a V-belt type automatic transmission 155 by which the power outputted from the crankshaft 37 is speed-changed automatically and stagelessly, and a speed reduction gear train 156 provided between the V-belt type automatic transmission 155 and the axle 157 of the rear wheel WR.

A case 158 of the power transmission unit T is disposed on the left side of the rear wheel WR so as to bulge to the left side from the crankcase 39, and is comprised of a case main body 159 connected to the crankcase 39 and the cylinder block 40 and extending to the left side of the rear wheel WR, a left-side case 160 connected to the case main body 159 so as to cover the left side of the case main body 159, and a right-side case 161 connected to the case main body 159 so as to cover the right side of a rear portion of the case main body 159. A first transmission chamber 162 is formed between the case main body 159 and the left-side case 160, and a second transmission chamber 163 is formed between the rear portion of the case main body 159 and the right-side case 161. Moreover, the case main body 159 is integrally provided with a tubular bearing housing 164 for rotatably supporting the input shaft 125 of the oil pump 123 in cooperation with the pump case 124, and the driven gear 126 provided on the input shaft 125 is disposed between the pump case 124 and the bearing housing 144.

The V-belt type automatic transmission 155 is contained in the first transmission chamber 162, and comprises a drive pulley 165 mounted to the other end portion of the crankshaft 37, a driven pulley shaft 166 having an axis parallel to the crankshaft 37 and rotatably borne on the case main body 159 and the right-side case 161, a driven pulley 167 mounted to the driven pulley shaft 166, and an endless form V-belt 168 wrapped around the drive pulley 165 and the driven pulley 167.

The drive pulley 165 is comprised of a fixed pulley half 169 fixed to the other end portion of the crankshaft 37, a movable pulley half 170 slidably borne on the crankshaft 37 so as to be capable of approaching and moving away from the fixed pulley half 169, and a centrifugal mechanism 171 producing a force for pressing the movable pulley half 170 to the side of the fixed pulley half 169 according to an increase in the rotational frequency of the crankshaft 37.

The driven pulley shaft 166 is rotatably borne on the right-side case 161 and the case main body 159 through ball bearings 172 and 173. The driven pulley 167 is comprised of a fixed pulley half 174 relatively rotatably borne on the driven pulley shaft 166 at a fixed position in the axial direction, and a movable pulley half 175 which is slidably and relatively rotatably borne on the fixed pulley half 174 so as to be capable of approaching and moving away from the fixed pulley half 174 and which is spring-biased toward the side of the fixed pulley half 174.

Moreover, a centrifugal clutch 176 for connecting the fixed pulley half 174 and the driven pulley shaft 166 to each other according to an increase in the rotational frequency of the fixed pulley half 174 is provided between the fixed pulley half 174 and the driven pulley shaft 166.

The speed reduction train 156 is contained in the second transmission chamber 163, and is comprised of an intermediate shaft 179 having both end portions rotatably borne on the right-side case 161 and the case main body 159, a first gear 180 provided on the driven pulley shaft 166, a second gear 181 provided on the intermediate shaft 179 in mesh with the first gear 180, a third gear 182 provided on the intermediate shaft 179, and a fourth gear 183 meshed with the third gear 182. A first one-way clutch 184 is interposed between the axle 157 of the rear wheel WR and the fourth gear 183.

Meanwhile, an axle support member 185 extending to the right side of the rear wheel WR is fastened to the outside wall of the case main body 39R of the crankcase 39, and the axle 157 of the rear wheel WR is rotatably borne on a support tube portion 186 provided at a rear portion of the axle support member 185, the right-side case 161 of the case 158 of the power transmission unit T, and the case main body 159 of the case 158. Specifically, the axle 157 rotatably penetrate through the support tube portion 186 and the right-side case 161 into the second transmission chamber 163, a ball bearing 187 is interposed between the support tube portion 186 and the axle 157, a ball bearing 188 is interposed between the right-side case 161 and the axle 157, and a ball bearing 189 is interposed between the case main body 159 and the axle 157.

In addition, a driven sprocket 191 is mounted to a projected end portion of the axle 157 projected outwards from the support tube portion 186, through a second one-way clutch 190.

In Fig. 14, a left-right pair of frame-side brackets 192, 192 extending downwards are attached to rear portions of the main frame 17 of the vehicle body frame 15 on the front side of the engine main body 38, both end portions of a pedal shaft 194 having an axis parallel to the axle 157 of the rear wheel WR and penetrating through a support tube 193 provided between both the frame-side brackets 192, 192 is rotatably borne on the support tube 193 through ball bearings 195, 195, and crank pedals 34··· are attached to both ends of the pedal shaft 194 projecting from the support tube 193.

A driving sprocket 196 is fixed to the pedal shaft 194 between the right-side crank pedal 34 and the support tube 193. A support arm 197 borne on the axle support member 185 so as to be turnable around an axis parallel to the axle 157 is disposed on the lower side of the axle 157, and a pair of sprockets 198 and 199 are rotatably borne on the support arm 197. An endless form chain 200 is wrapped around the driving sprocket 196, the driven sprocket 191 on the side of the axle 157, and both the sprockets 189 and 199, and the support arm 197 is spring-biased toward the side for tensioning the chain 200.

Namely, the chain 200 for transmitting the tread forces on the crank pedals 34 ··· to the rear wheel WR is disposed on the right side of the engine main body 38, and a chain cover 201 for covering the chain 200 from outside is supported on the vehicle body frame 15.

Thus, the power from the engine E can be transmitted to the axle 157 of the rear wheel WR through the power transmission unit T, and the power generated by the tread on the crank pedals 34 can also be transmitted to the axle 157 of the rear wheel WR. Of the power from the engine E and the power from the crank pedals 34 ··· , the one with a higher rotational frequency is transmitted to the axle 157 under the functions of the first and second one-way clutches 184 and 190. It should be noted here that, when the load required for rotating the rear wheel WR is increased as at the time of ascending a slope, the power can be transmitted to the axle 157 from both of the engine E and the crank pedals 34···.

Meanwhile, a rear-wheel brake BR is a drum brake comprising a brake drum 203 attached to an axle cylinder 202 relatively non-rotatably connected to the axle 157. The rear wheel WR is comprised of a hub 204 fixed to a cylinder support portion 203a possessed by the brake drum 203 so as to coaxially surround the axle cylinder 202, a rim 205 coaxially surrounding the hub 204, a tire 206 mounted to the rim 205, and a plurality of wire spokes 207··· provided between the hub 204 and the rim 205.

The hub 204 is comprised of a cylinder portion 204a attached to the outer circumference of the brake drum 203 by welding, and a pair of flanges 204b, 204b provided integral with both ends of the cylinder portion 204a. Both the flanges 204b, 204b are provided respectively with a plurality of connection holes 208··· for engagement and connection of the inner ends of the wire spokes 207···.

In Fig. 15, a front-wheel brake BF is a drum brake comprising a brake drum 213 attached to an axle cylinder 212 relatively non-rotatably connected to an axle 211 of the front wheel WF. The front wheel WF is comprised of a hub 214 fixed to a cylinder support portion 213a possessed by the brake drum 213 so as to coaxially surround the axle cylinder 212, a rim 215 coaxially surrounding the hub 214, a tire 216 mounted to the rim 215, and a plurality of wire spokes 217··· provided between the hub 214 and the rim 215.

The hub 214 is comprised of a cylinder portion 214a attached to the outer circumference of the brake drum 213 by welding, and a pair of flanges 214b, 214b provided integral with both ends of the cylinder portion 214a. The flanges 214b, 214b are provided respectively with a plurality of connection holes 218··· for engagement and connection of the inner ends of the wire spokes 217···.

Meanwhile, the front fork 21 for supporting the axle 212 of the front wheel WF is comprised of a left-right pair of leg portions 21a, 21a disposed on both sides of the front wheel WF, a shaft portion 21b rotatably borne on the head pipe 16 and disposed on the upper side of the front wheel WF, and bridge portions 21c, 21c for connecting between a lower portion of the shaft portion 21b and upper portions of both the leg portions 21a, 21a. Both ends of the axle 212 are fixed to and supported by lower end portions of both the leg portions 21a, 21a. In addition, a front fender 219 for covering the front wheel WF from above is supported on a lower end portion of the shaft portion 21b.

A front portion of the power unit P is vertically oscillatably borne on the vehicle body frame 15 through a vibration-proofing link 220. The vibration-proofing link 220 comprises a left-right pair of engine-side brackets 221, 221 provided at front lower portions of the case main body 159 in the power unit P at positions set off to the left side from the vehicle body center line BC, a left-right pair of frame-side brackets 222, 222 attached to the main frame 17 of the vehicle body frame 15, a cylindrical turnable tube 223 disposed between both the engine-side brackets 221, 221, a connection shaft 224 provided between both the engine-side brackets 221, 221 so as to turnably bear the turnable tube 223, a link member 225 formed in a rectangular tubular form in lateral section and having one end attached to the turnable tube 223, a cylindrical outer tube 226 which is disposed between both the frame-side brackets 222, 222 and to which the other end of the link member 225 is attached, a cylindrical inner tube 227 coaxially disposed inside the outer tube 226, rubber bushes 229 ··· having inner circumferences baked respectively to both end portions of the inner tube 227 and having outer circumferences baked respectively to a cylindrical case 228 pressed into both end portions of the outer cylinder 226, an oscillation support shaft 230 provided between both the frame-side brackets 222, 222 so as to turnably bear the inner tube 227, an arm 231 attached to an intermediate portion in the axial direction of the outer tube 226 and extending forwards, and a stopper rubber 232 mounted to the tip end of the arm 231.

The stopper rubber 232 is inserted into a tubular contacted body 234 attached to the support tube 193 provided between both the frame-side brackets 222, 222 so that both upper and lower surfaces of the stopper rubber 232 is brought into contact with the upper and lower inside surfaces of the contacted body 234. Moreover, the contacted body 234 and the stopper rubber 232 are disposed at positions further set off to the left side from the vehicle body center line BC than the engine-side brackets 221, 221 and the link member 225.

In the vibration-proofing link 220 constituted as above, the load exerted on the oscillation support shaft 230 from the engine E of the power unit P is absorbed by elastic deformation of the rubber bushes 229 ··· and is absorbed by elastic deformation of the stopper rubber 232 pressed against the upper and lower inside surfaces of the contacted body 234. Moreover, with the stopper rubber 232 brought into contact with the upper and lower inside surfaces of the contacted body 234, the vertical oscillation range of the power unit P is restricted.

Referring to Fig. 16 also, an upper portion of the power unit P and the vehicle body frame 15 are connected to each other through a non-expandable support member 235 so as to permit vertical oscillation of the power unit P. Moreover, a front upper portion of the case main body 159 in the power unit P is provided with a bracket 236 at a position set off to the left side from the vehicle body center line BC, and a bracket 237 is provided between the support stay 19 of the vehicle body frame 15 and the left-side reinforcing member 20 at a position set off to the left side from the vehicle body center line BC. The upper end of the support member 235, which is formed in a solid cylindrical shape, is turnably connected to the bracket 237 on the side of the vehicle body frame 15 through a rubber bush 238 and a connection shaft 239 having an axis parallel to the oscillation support shaft 230 of the vibration-proofing link 220. In addition, the lower end of the support member 235 is turably connected to the bracket 236 on the side of the power unit P through a rubber bush 240 and a connection shaft 241 parallel to the connection shaft 239.

Moreover, both the brackets 236 and 237 are provided respectively in the power unit O and the vehicle body frame 15 so that both the brackets 236 and 237 are connected to each other through the support member 235 on the front side of the rear wheel WR.

Next, the functions of the first embodiment will be described. In the engine E, the camshaft 68 is disposed closer to the combustion chamber 55 than the points of conjunction and connection between the intake valve 58 and the exhaust valve 59 and the intake-side and exhaust-side rocker arms 70, 71, and the intake valve 58 and the exhaust valve 59 are disposed in the cylinder head 41 with their opening and closing directions parallel to each other. Therefore, the points of conjunction and connection between the intake valve 58 and the exhaust valve 59 with their opening and closing directions mutually parallel and the intake-side and exhaust-side rocker arms 70, 71 can be disposed close to each other, whereby the width of the cylinder head 41 can be reduced.

In addition, the intake port 56, which is one of the intake port 56 and the exhaust port 57, is provided in the cylinder head 41 at a position spaced away from one end in the axial direction of the camshaft 68 so that it overlaps with at least a part of the camshaft 68 as viewed on a projection onto a plane orthogonal to the axis of the camshaft 68. Therefore, the camshaft 68 can be disposed further closer to the side of the combustion chamber 55, whereby the size of the cylinder 41 in the direction along the cylinder axis C can be further reduced.

Besides, the intake port 56 is provided in the cylinder head 41 so as to intersect with the rocker shaft 69 as viewed on a projection onto a plane orthogonal to the cylinder axis C, so that the size of the cylinder head 41 in the direction along the axis of the rocker shaft 69 can be reduced.

Moreover, since the opening portions of the intake port 56 and the exhaust port 57 into the combustion chamber 55 are disposed on a straight line parallel to the axis of the camshaft 68, a swirl can be generated in the combustion chamber 55, and combustion efficiency can be enhanced.

Further, since the spark plug 76 having an axis at an acute angle α against the plane P1 containing the axes of the intake valve 58 and the exhaust valve 59 in common is attached to the cylinder head 41, arrangement of component parts relating to the intake valve 58 and the exhaust valve 59 in the surroundings of the spark plug 76 is obviated, and a sufficient open space can be secured, whereby a cooling airflow can be made to impinge on the spark plug 76, and the spark plug 76 can be cooled efficiently.

Meanwhile, the first assembly opening portion 87 corresponding to the camshaft 68 and the second assembly opening portion 98 corresponding to the rocker shaft 69 are mutually independently provided in one side wall of the cylinder head 41, the second cover member 99 for closing the second assembly opening portion 98 is fitted in the second assembly opening portion 98 so as to be inhibited from moving axially inwards, and the first cover member 88 is fixed to the cylinder head 41, for example by screwing-in, so as to be engaged with the outside surface of the second cover member 99.

Therefore, the second cover member 99 does not need to secure a space for attaching it to the cylinder head 41 in the surroundings of the second assembly opening portion 98, which can contribute to a reduction in the size of the cylinder head 41 through setting small the distance between the axes of the camshaft 68 and the rocker shaft 69. Moreover, the boring of the first support recessed portion 82 and the first support hole 83 for assembling the camshaft 68 and the boring of the second support recessed portion 95 and the second support hole 96 for assembling the rocker shaft 69 can be carried out in the same direction from one side of the cylinder head 41. Therefore, complicated operations are unnecessitated, working accuracy can be enhanced sufficiently, and the number of working steps can be reduced.

In addition, the secondary air supply passage 107 for supplying secondary air to the exhaust port 57 is connected to the reed valve 105 provided in the head cover 42 of the engine main body 38, and a part of the secondary air supply passage 107 is composed of the secondary air supply pipe 117 having both ends connected to the engine main body 38 so as to expose the outside surface thereof to the atmosphere.

Therefore, it is possible to restrain the transfer of heat to the side of the reed valve 105 by air-cooling the secondary air supply pipe 117. Accordingly, even in the case where the engine E is of the air-cooled type, bad thermal influences on the reed valve 105 can be suppressed while reducing the length of the secondary air supply passage 107 between the reed valve 105 and the exhaust port 57 by providing the reed valve 105 in the head cover 42.

Besides, both ends of the secondary air supply pipe 117 are clamped between the cylinder head 41 and the head cover 42, which are mutually coupled. Therefore, there is no need for connection component parts such as bands and clips for connecting the secondary air supply pipe 117 to the engine main body 38, and reductions in the number of component parts and the number of assembling steps are contrived, whereby cost can be reduced. Moreover, since it is needless to take into account the space for disposing the connection component parts, the degree of freedom in design can be increased.

In addition, the O-rings 118 and 119 are interposed respectively between both end outside surfaces of the secondary air supply pipe 117 and the head cover 42 and the cylinder head 41. Therefore, the sealing property of the connection portions between both ends of the secondary air supply pipe 117 and the head cover 42 and the cylinder head 41 can be enhanced by utilizing the springy forces of the O-rings 118 and 119, while making it unnecessary to enhance the working accuracy of both ends of the secondary air supply pipe 117. Besides, cost can be reduced through a reduction in the number of working steps, and the assembling operation becomes easier as compared with the case of using connection component parts such as bands and clips.

Moreover, since the engine main body 38 is mounted on the motorcycle in such a posture that the secondary air supply pipe 117 fronts on the forward side of the running direction, the secondary air supply pipe 117 can be cooled further effectively by the running airflow generated at the time of running of the motorcycle.

The engine main body 38 is mounted on the motorcycle in such a posture that the reed valve 105 fronts on the forward side of the running direction of the motorcycle and that the first passage portion 107a provided in the head cover 42 so as to connect the reed valve 105 and the secondary air supply pipe 117 to each other fronts on the forward side of the running direction of the motorcycle. With this arrangement, it is possible to further suppress bad thermal influences on the reed valve 105 by the cooling effect of the running airflow.

Further, a front portion of the power unit P comprising the engine E and the power transmission unit T for transmitting the output of the engine E to the rear wheel WR through speed change is vertically oscillatably borne on the vehicle body frame 15 through the vibration-proofing link 220. The vibration-proofing link 220 is provided with the stopper rubber 232 for restricting the vertical oscillation range of the power unit P by making springy contact with the contacted body 234 provided on the vehicle body frame 15. The non-expandable support member 235 for connecting the power unit P and the vehicle body frame 15 to each other while permitting vertical oscillation of the power unit P is provided between an upper portion of the power unit P and the vehicle body frame 15.

Therefore, the power unit P is supported on the vehicle body frame 15 through the non-expandable support member 235 in place of a conventional rear cushion, whereby reductions in size and weight and a reduction in cost can be achieved. Moreover, the vertical oscillation range of the power unit P is determined by the flexure amount of the stopper rubber 232 making springy contact with the contacted body 234 provided on the side of the vehicle body frame 15. Therefore, it is possible to restrict the vertical oscillation range of the power unit P to a comparatively narrow range, to thereby enhance space efficiency, to facilitate designing of arrangement of outfitting component parts both on the side of the vehicle body frame 15 and on the side of the power unit P, and to increase the degree of freedom of designing inclusive of ornamental design.

In addition, since an upper portion of the power unit P on the front side of the rear wheel WR and a rear portion of the vehicle body frame 15 are connected to each other through the support member 235, the support member 235 can be reduced in length, and further reductions in weight and cost can be contrived. Moreover, one end of the support member 235 is connected to the bracket 237 which is provided between the support stay 19 having both ends attached to the seat post 18 and one of the reinforcing members 20··· extending rearwardly upwards from the seat post 28 so as to respectively connect both left and right sides of the support stay 19 and the seat post 28 to each other. Therefore, the power unit P can be firmly supported notwithstanding the simple structure.

Besides, the oil is jetted from the oil jet hole 143 on the back side of the piston 44 and the crank pin 46, which is the connection portion between the connecting rod 45 and the crankshaft 37. The oil jet hole 143 is provided in the crankcase 39 in the state of being communicated to an intermediate portion of the oil supply passage 137 provided in the engine main body 38 in the range from the crankcase 39 to the head cover 42 so as to lead the oil fed from the oil pump 123 disposed in the crankcase 39.

Therefore, for jetting the oil toward the side of the crank pin 46 and the piston 44, it suffices to only provide the crankcase 39 with the oil jet hole 143, and it is unnecessary to provide a special component part. Accordingly, the oil can be jetted with a simple and inexpensive structure, and a reduction in the weight of the engine E can be contrived.

In addition, since the oil jet hole 143 is provided in the crankcase 39 on the upper side of the crankshaft 37, the jetting of the oil from the upper side eliminates the need to set the oil jet pressure at a comparatively high pressure, and makes it possible to set the discharge pressure of the oil pump 123 at a comparatively low level, whereby a reduction in the size of the oil pump 123 can be contrived.

Further, the crankcase 39 is comprised of the pair of case halves 39L and 39R coupled with each other. At least one of the case halves 39L and 39R, in this embodiment the case half 39R, is provided with the oil passage groove 142 for forming the oil passage 139, which constitutes a part of the oil supply passage 143, between the coupling surfaces 134 of the case halves 39L and 39R. The oil jet hole 143 is formed between the coupling surfaces 134 of the case halves 39L and 39R in the state of being communicated with the oil passage groove 142. With such a constitution, the working to be applied to the crankcase 39 for the purpose of jetting the oil can be facilitated.

Moreover, the portion of the oil supply passage 137 communicated to the oil jet hole 143, namely, the oil passage 139 is provided in the crankcase 39 so as to pass through the vicinity of the crank pin 46. Therefore, the oil jet hole 143 can be disposed close to the crank pin 46, and the pressure of the jet from the oil jet hole 143 can be set at a comparatively low value, so that a reduction in the size of the oil pump 123 can be contrived.

In addition, the oil jet hole 143 is disposed in the range surrounded by the pair of vertical lines VL1 and VL2 respectively passing both left and right ends of the rotational locus RL of the portion farthest from the axis of the crankshaft 37 of the outer circumference of the large end portion 45a of the connecting rod 45, the horizontal line HL passing through the uppermost end of the rotational locus RL, and the rotational locus RL. Therefore, the oil can be jetted from an upper position close to the crank pin 24, so that the discharge pressure of the oil pump 123 can be set to be further lower, and a reduction in the size of the oil pump 123 can be contrived.

Meanwhile, the crankshaft 37-is rotatably borne on the crankcase 39 through the left-right pair of ball bearings 47 and 48, and the driving sprocket 78 for transmitting the rotational power of the crankshaft 37 to the camshaft 68 of the valve-operating device 67 and the driving gear 127 for transmitting the rotational power of the crankshaft 37 to the oil pump 123 are attached to the crankshaft 37. The driving gear 127 is disposed on the outer side of one 48 of both the ball bearings 47 and 48, and the driving sprocket 78 is disposed on the further outer side of the driving gear 127.

Therefore, since the driving sprocket 78 and the driving gear 127 are disposed on the outer side of the ball bearing 48, it is unnecessary to provide a sealed oil chamber for each of the driving sprocket 78 and the driving gear 127, and the size of the engine E in the direction along the axis of the crankshaft 37 can be reduced accordingly.

Moreover, since the driving sprocket 78 is disposed on the outer side of the driving gear 127, the cam chain 80 wrapped around the driving sprocket 78 can be disposed at a position comparatively spaced from the cylinder bore 43, whereby the thermal influence exerted on the cam chain 80 from the side of the cylinder bore 43 can be suppressed.

Meanwhile, the engine main body 38 is provided with the timing transmission chamber 81 on the left side of the cylinder axis C inclined forwardly upwards, and the left side surface of the cylinder block 40 of the engine main body 38 is, on the front side of the crankcase 39, provided with the oil injection port 148 communicated with the timing transmission chamber 81.

Here, the power transmission unit T is contained in the case 158 disposed on the left side of the rear wheel WR so as to bulge to the left side from the crankcase 39, and the left side surface of the cylinder block 40 on the front side of the crankcase 39 is located at a position receded inwards as compared with the case 158. Therefore, the cylinder block 40 is provided with the oil injection port 148 at a position receded inwards as compared with the case 158, whereby the oil injection port 148 can be arranged while obviating an enlargement of the size of the engine main body 38 in the direction along the axis of the crankshaft 37 and avoiding the interference with the component parts present in the surroundings of the engine main body 38. Moreover, attendant on the forwardly upward inclination of the engine main body 38, the timing transmission chamber 81 communicated with the oil injection port 148 is inclined with the side of the crankcase 39 at a lower position, so that the oil injected from the oil injection port 148 into the timing transmission chamber 81 can be made to flow smoothly to the side of the crankcase 39.

Moreover, in the rear wheel WR and the front wheel WF, the hubs 204, 214 are so constituted as to be integrally provided with the pair of flanges 204b, 204b; 214b, 214b for connection of the plurality of wire spokes 207···, 217···. This structure can solve the problem of rusting due to the penetration of water into joint surfaces between a plurality of members, as compared with the case where the hubs are each composed of a plurality of members. In addition, since the hubs 204 and 214 are each integrally formed, the positioning of a welding jig at the time of welding both the flanges 204b, 204b; 214b, 214b to the cylinder support portions 203a, 213a of the brake drums 203, 213 need only the positioning in relation to the hubs 204, 214, so that the number of working steps can be reduced. Moreover, by integrally forming each of the hubs 204, 214, the positional accuracy of the connection holes 208···, 218··· provided in both of the flanges 204b, 204b; 214b, 214b so as to face each other in the axial directions of the axles 157, 212 can be easily secured.

Fig. 17 illustrates a second embodiment of the present invention. The oil jet hole 143' for jetting the oil to the back side of the piston 44 and the crank pin 46, which constitutes the connection portion between the connecting rod 45 and the crankshaft 37, is provided in the case half 39R of the crankcase 39 in the state of being communicated to an intermediate portion of the oil supply passage 137 for leading the oil fed from the oil pump 123. The oil jet hole 143' is provided in the case half 39R so as to be communicated to the oil passage 140 of the oil supply passage 137 on the upper side of the crankshaft 37.

According to the second embodiment, also, like in the first embodiment, for jetting the oil toward the side of the crank pin 46 and the piston 44, it suffices to only provide the crankcase 39 with the oil jet hole 143, and it is unnecessary to provide a special component part, so that the oil can be jetted with a simple and inexpensive structure, and a reduction in the weight of the engine E can be contrived. The jetting of the oil from the upper side eliminates the need to set the oil jet pressure at a comparatively high pressure, and makes it possible to set the discharge pressure of the oil pump at a comparatively low level, so that a reduction in the size of the oil pump 123 can be contrived.

Fig. 18 illustrates a third embodiment of the present invention. A plurality, for example, a pair of oil jet holes 143, 143 for jetting the oil toward the back side of the piston 44 and the crank pin 46 are provided in the crankcase 39 in the state of being communicated to an intermediate portion of the oil supply passage 137. The oil jet holes 143, 143 are formed between the case halves 39L and 39R so as to be communicated with the oil passage 139 of the oil supply passage 137.

According to the third embodiment, not only the effects of the first embodiment above can be displayed, but also a wide-range portion inclusive of the crank pin 46 and the piston 44 can be lubricated with a simple structure.

Figs. 19 and 20 illustrate a fourth embodiment of the present invention, in which Fig. 19 is a sectional view corresponding to Fig. 5 of the first embodiment, and Fig. 20 is an enlarged sectional view taken along line 20-20 of Fig. 19.

A timing transmission mechanism 247 for transmitting the rotational power of the crankshaft 37 to the camshaft 68 through a speed reduction ratio of 1/2 is provided between the camshaft 68 and the crankshaft 37. The timing transmission mechanism 247 is comprised of a driving pulley 248 fixed to the crankshaft 37 on the outside of the driving gear 127, a driven pulley 249 fixed to the camshaft 68, and an endless form timing belt 250 wrapped around the crankshaft 37 and the camshaft 68, wherein the timing belt 250 is movably contained in the timing transfer chamber 81 formed in the engine main body 38 in the area ranging from the crankcase 39 through the cylinder block 40 and the cylinder head 41 to the head cover 42.

According to the fourth embodiment as above, also, the same effects as those of each of the above embodiments can be displayed.

Meanwhile, since the timing transmission chamber 81 is inclined with the side of the crankcase 39 at a lower position, the oil from the cylinder head 41 is favorably returned to the side of the crankcase 39 via the timing transmission chamber 81, so that it is difficult for the oil to adhere to the timing belt 250, and the life of the timing belt 250 can be prolonged. In addition, adhesion of the oil to the portions of wrapping of the timing belt 250 onto the driving pulley 248 and the driven pulley 249 is suppressed, and friction can be reduced.

While the embodiments of the present invention have been described above, the invention is not limited to the above embodiments, and various design modifications are possible without departing from the invention as set forth in claims.

## Claims

1. A four-cycle single-cylinder engine comprising a crankshaft (37) connected through a connecting rod (45) and a crank pin (46) to a piston (44) slidably fitted in a cylinder bore (43), said crankshaft (37) being rotatably borne on a crankcase (39) through a pair of bearings (47, 48) disposed with a spacing therebetween in the axial direction of said crankshaft (37), a wrapping driving wheel (78, 248) for transmitting a rotational power of said crankshaft (37) to a camshaft (68) of a valve-operating device (67), and a driving gear (127) for transmitting the rotational power of said crankshaft (37) to an oil pump (123) disposed in said crankcase (39), said wrapping driving wheel (78, 248) and said driving gear (127) being firmly attached to said crankshaft (37), wherein said driving gear (127) is disposed on the outer side of one (48) of said bearings (47, 48) and meshes with a driven gear (126), said wrapping driving wheel (78, 248) integrally formed with said driving gear (127) is disposed on the further outer side of said driving gear (127),
**characterized in that** said oil pump (123) is located at substantially the same position as said one bearing (48) in the axial direction of the crankshaft (37), and an input shaft (125) is provided for transmitting power from the driving gear (127) to the oil pump (123), and wherein a case member (159) for housing a power transmission unit. (T) cooperates with said crankcase (39L) to define a space therebetween within which space the driving gear (127), the wrapping driving wheel (78, 248), the oil pump (123) and the input shaft (125) are arranged.

2. A four-cycle single-cylinder engine as claimed in claim 1, wherein the oil pump (123) is mounted to an outside surface of the crankcase (39L) and said input shaft (125) is rotatably supported at one of opposite ends thereof on the case member (159) for the power transmission unit (T) and at the other end connected to the oil pump (123) and rotatably supported on a pump case (124) of the oil pump (123), the pump case (124) being provided on the outside surface of the crankcase (39L).

3. A four-cycle single-cylinder engine as claimed in claim 1 or 2, wherein an oil supply passage (137) through which an oil discharged from the oil pump (123) disposed in said crankcase (39) is led to the side of a cylinder block (40), said oil supply passage (137) being provided in said crankcase (39), and an oil jet hole (143, 143') for jetting said oil toward the side of said crank pin (46) and said piston (44) is provided in said crankcase (39) in the state of being communicated directly to an intermediate portion of said oil supply passage (137).

4. A four-cycle single-cylinder engine as claimed in claim 3, wherein said oil jet hole (143, 143') is provided in said crankcase (39) on the upper side of said crankshaft (37).

5. A four-cycle single-cylinder engine as claimed in claim 3 or 4, wherein said crankcase (39) is comprised of a pair of case halves (39L, 39R) mutually coupled, at least one (39R) of both said case halves (39L, 39R) is provided with an oil passage groove (142) for forming an oil passage (139) constituting a part of said oil supply passage (137) between coupling surfaces (134) of both said case halves (39L, 39R), and said oil jet hole (143) is formed between said coupling surfaces (134) of both said case halves (39L, 39R) in the state of being communicated to said oil passage groove (142).

6. A four-cycle single-cylinder engine as claimed in any of claims 3 to 5, wherein said oil supply passage (137) is provided in said crankcase (39) so that said oil supply passage (137) passes through the vicinity of said crank pin (46) at least at its portion communicated to said oil jet hole (143, 143').

7. A four-cycle single-cylinder engine as claimed in claim 6, wherein said oil jet hole (143) is disposed within a range surrounded by a pair of vertical lines (VL1, VL2) passing respectively through the left and right ends of a rotational locus (RL) of a portion farthest from an axis of said crankshaft (37) of an outer periphery of a large end portion (45a) of said connecting rod (45), a horizontal line (HL) passing through the uppermost end of said rotational locus (RL), and said rotational locus (RL), as viewed on a projection onto a plane orthogonal to the axis of said crankshaft (37).

8. A four-cycle single-cylinder engine as claimed in any of claims 3 to 7, wherein a plurality of said oil jet holes (143) are provided in said crankcase (39) in the state of being communicated directly to intermediate portions of said oil supply passage (137).

9. A four-cycle single-cylinder engine as claimed in claim 1 or 2, wherein an engine main body (38) including the crankcase (39) is mounted on a vehicle body frame (15) of an engine-assisted bicycle on the front side of a rear wheel (WR) in such a posture as to have a cylinder axis (C) inclined forwardly upwards with a cam chain chamber (81) provided on the left side of the cylinder axis (C), the cam chain chamber (81) housing a cam chain (80) wrapped around the wrapping driving wheel (78, 248) for transmitting power from the crankshaft (37) to a camshaft (68) of the valve-operating device (67); a chain (200) for transmitting tread forces from crank pedals (34) rotatably borne on the vehicle body frame (15) on the front side of the engine main body (38) to the rear wheel (WR) is disposed on the right side of the engine main body (38); the power transmission unit (T) for transmitting the power from the crankshaft (37) to the rear wheel (WR) through speed change is contained in a case (158) including said case member disposed on the left side of the rear wheel (WR) so as to bulge toward the left side from the crankcase (39); and an oil injection port (148) communicated with the cam chain chamber (81) is provided in a left side surface of the engine main body (38) on the front side of the crankcase (39).

## Patentansprüche

1. Viertakt-Einzylinder-Motor, umfassend eine Kurbelwelle (37), welche durch eine Pleuelstange (45) und einen Kurbelzapfen (46) mit einem Kolben (44) verbunden ist, welcher gleitbar in einer Zylinderbohrung (43) eingepasst ist, wobei die Kurbelwelle (37) drehbar an einem Kurbelgehäuse (39) durch ein Paar von Lagern (47, 48) getragen wird, welche mit einem Abstand dazwischen in der axialen Richtung der Kurbelwelle (37) angeordnet sind, ein Umwicklungsantriebsrad (78, 248) zum Übertragen einer Rotationsleistung von der Kurbelwelle (37) zu einer Nockenwelle (68) einer Ventilbetriebsvorrichtung (67) und ein Antriebszahnrad (127) zum Übertragen der Rotationsleistung von der Kurbelwelle (37) an eine Ölpumpe (123), welche in dem Kurbelgehäuse (39) angeordnet ist, wobei das Umwicklungsantriebsrad (78, 248) und das Antriebszahnrad (127) fest an der Kurbelwelle (37) angebracht sind, wobei das Antriebszahnrad (127) an der äußeren Seite eines (48) der Lager (47, 48) angeordnet ist und mit einem angetriebenen Zahnrad (126) in Eingriff steht, wobei das Umwicklungsantriebsrad (78, 248), welches integral mit dem Antriebszahnrad (127) gebildet ist, an der weiter äußeren Seite des Antriebszahnrads (127) angeordnet ist,
**dadurch gekennzeichnet, dass** die Ölpumpe (123) an der im Wesentlichen gleichen Position wie das eine Lager (48) in der axialen Richtung der Kurbelwelle (37) angeordnet ist, und dass eine Antriebswelle (125) bereitgestellt ist, um Leistung von dem Antriebszahnrad (127) zu der Ölpumpe (123) zu übertragen, und wobei ein Gehäuseelement (159) zum Aufnehmen einer Leistungsübertragungseinheit (T) mit dem Kurbelgehäuse (39L) zusammenwirkt, um einen Raum dazwischen zu definieren, innerhalb welchen Raumes das Antriebszahnrad (127), das Umwicklungsantriebsrad (78, 248), die Ölpumpe (123) und die Antriebswelle (125) angeordnet sind.

2. Viertakt-Einzylinder-Motor nach Anspruch 1, wobei die Ölpumpe (123) an einer Außenseitenfläche des Kurbelgehäuses (39L) angebracht ist, und die Antriebswelle (125) drehbar an einem von entgegengesetzten Enden davon an dem Gehäuseelement (159) für die Leistungsübertragungseinheit (T) gelagert ist, und an dem anderen Ende mit der Ölpumpe (123) verbunden und drehbar an einem Pumpengehäuse (124) der Ölpumpe (123) gelagert ist, wobei das Pumpengehäuse (124) an der Außenseitenfläche des Kurbelgehäuses (39L) bereitgestellt ist.

3. Viertakt-Einzylinder-Motor nach Anspruch 1 oder 2, wobei eine Ölzuführungspassage (137), durch welche ein Öl, das von der Ölpumpe (123) ausgegeben wird, welche in dem Kurbelgehäuse (39) angeordnet ist, zu der Seite eines Zylinderblocks (40) geführt wird, wobei die Ölzuführungspassage (137) in dem Kurbelgehäuse (39) bereitgestellt ist, und ein Öldüsenloch (143, 143') zum Ausstoßen des Öls in Richtung der Seite des Kurbelzapfens (46) und des Kolbens (44) in dem Kurbelgehäuse (39) in dem Zustand bereitgestellt ist, in dem es direkt mit einem Mittelabschnitt der Ölzuführungspassage (137) in Verbindung steht.

4. Viertakt-Einzylinder-Motor nach Anspruch 3, wobei das Öldüsenloch (143, 143') in dem Kurbelgehäuse (39) an einer oberen Seite der Kurbelwelle (37) bereitgestellt ist.

5. Viertakt-Einzylinder-Motor nach Anspruch 3 oder 4, wobei das Kurbelgehäuse (39) ein Paar von gegenseitig gekoppelten Gehäusehälften (39L, 39R) umfasst, wobei wenigstens eine (39R) der beiden Gehäusehälften (39L, 39R) mit einer Ölpassagennut (142) bereitgestellt ist, zum Bilden einer Ölpassage (139), welche einen Teil der Ölzuführungspassage (137) zwischen Kopplungsflächen (134) der beiden Gehäusehälften (39L, 39R) bildet, und wobei das Öldüsenloch (143) zwischen den Kopplungsflächen (134) der beiden Gehäusehälften (39L, 39R) in dem Zustand gebildet ist, in dem es mit der Ölpassagennut (142) in Verbindung steht.

6. Viertakt-Einzylinder-Motor nach einem der Ansprüche 3 bis 5, wobei die Ölzuführungspassage (137) in dem Kurbelgehäuse (39) bereitgestellt ist, so dass die Ölzuführpassage (137) wenigstens an ihrem Abschnitt, der mit dem Öldüsenloch (143, 143') in Verbindung steht, durch die Umgebung des Kurbelzapfens (46) geführt ist.

7. Viertakt-Einzylinder-Motor nach Anspruch 6, wobei das Öldüsenloch (143) innerhalb eines Bereichs angeordnet ist, welcher von einem Paar von vertikalen Linien (VL1, VL2), die durch das linke bzw. das rechte Ende einer Rotationsortslinie (RL) eines am weitesten von einer Achse der Kurbelwelle (37) entfernten Abschnitts eines äußeren Umfangs eines großen Endabschnitts (45a) der Pleuelstange (45) gehen, von einer horizontalen Linie (HL), die durch das oberste Ende der Rotationsortslinie (RL) geht, und von der Rotationsortslinie (RL), betrachtet auf einer Projektion auf eine zu der Achse der Kurbelwelle (37) orthogonalen Ebene, umgeben ist.

8. Viertakt-Einzylinder-Motor nach einem der Ansprüche 3 bis 7, wobei eine Mehrzahl der Öldüsenlöcher (143) in dem Kurbelgehäuse (39) in dem Zustand bereitgestellt ist, in dem sie direkt mit Mittelabschnitten der Ölzuführungspassagen (137) in Verbindung stehen.

9. Viertakt-Einzylinder-Motor nach Anspruch 1 oder 2, wobei ein Motorhauptkörper (38), der das Kurbelgehäuse (39) umfasst, an einem Fahrzeugkörperrahmen (15) eines Motor-unterstützten Fahrrads an der Vorderseite eines Hinterrades (WR) in einer solchen Stellung anbracht ist, um eine Zylinderachse (C) nach vorne aufwärts aufzuweisen, mit einer Steuerkettenkammer (81), die an der linken Seite der Zylinderachse (C) bereitgestellt ist, wobei die Steuerkettenkammer (81) eine Steuerkette (80) aufnimmt, die um das Umwicklungsantriebsrad (78, 248) gewickelt ist, zum Übertragen von Leistung von der Kurbelwelle (37) zu der Nockenwelle (68) der Ventilbetriebsvorrichtung (67); wobei eine Kette (200) zum Übertragen von Trittkräften von Kurbelpedalen (34), die drehbar an dem Fahrzeugkörperrahmen (15) an der Vorderseite des Motorhauptkörpers (38) getragen werden, zu dem Hinterrad (WR) an der rechten Seite des Motorhauptkörpers (38) angeordnet ist; wobei die Leistungsübertragungseinheit (T) zum Übertragen der Leistung von der Kurbelwelle (37) zu dem Hinterrad (WR) durch eine Geschwindigkeitsänderung in einem Gehäuse (158) enthalten ist, welches das Gehäuseelement umfasst, das an der linken Seite des Hinterrades (WR) angeordnet ist, um sich in Richtung zu der linken Seite von dem Kurbelgehäuse (39) hin auszuwölben; und wobei eine Öleinspritzöffnung (148), die mit der Steuerkettenkammer (81) in Verbindung steht, in einer linken Seitenfläche des Motorhauptkörpers (38) an der Vorderseite des Kurbelgehäuses (39) bereitgestellt ist.

## Revendications

1. Moteur à cylindre unique à quatre temps comprenant un vilebrequin (37) relié par l'intermédiaire d'une bielle (45) et d'un maneton (46) à un piston (44) assemblé de manière coulissante dans un alésage de cylindre (43), ledit vilebrequin (37) étant supporté en rotation sur un carter (39) par une paire de paliers (47, 48) disposés avec un espacement entre eux dans la direction axiale dudit vilebrequin (37), une roue motrice d'enroulement (78, 248) pour transmettre une puissance de rotation dudit vilebrequin (37) à un arbre à cames (68) d'un dispositif d'actionnement de soupapes (67), et un pignon d'entraînement (127) pour transmettre la puissance de rotation dudit vilebrequin (37) à une pompe à huile (123) disposée dans ledit carter (39), ladite roue motrice d'enroulement (78, 248) et ledit pignon d'entraînement (127) étant fixés fermement audit vilebrequin (37), dans lequel ledit pignon d'entraînement (127) est disposé du côté externe de l'un (48) desdits paliers (47, 48) et engrène avec un pignon entraîné (126), ladite roue motrice d'enroulement (78, 248) formée d'un seul tenant avec ledit pignon d'entraînement (127) est disposée de l'autre côté externe dudit pignon d'entraînement (127), **caractérisé en ce que** ladite pompe à huile (123) est située sensiblement à la même position que ledit palier (48) dans la direction axiale du vilebrequin (37), et un arbre d'entrée (125) est prévu pour transmettre la puissance du pignon d'entraînement (127) à la pompe à huile (123), et dans lequel un élément de carter (159) pour recevoir une unité de transmission de puissance (T) coopère avec ledit carter (39L) pour définir un espace entre eux, dans lequel espace le pignon d'entraînement (127), la roue motrice d'enroulement (78, 248), la pompe à huile (123) et l'arbre d'entrée (125) sont agencés.

2. Moteur à cylindre unique à quatre temps selon la revendication 1, dans lequel la pompe à huile (123) est montée sur une surface extérieure du carter (39L) et ledit arbre d'entrée (125) est supporté en rotation à l'une de ses extrémités opposées sur l'élément de carter (159) pour l'unité de transmission de puissance (T) et est relié à l'autre extrémité à la pompe à huile (123) et est supporté en rotation sur un carter de pompe (124) de la pompe à huile (123), le carter de pompe (124) étant prévu sur une surface extérieure du carter (39L).

3. Moteur à cylindre unique à quatre temps selon la revendication 1 ou 2, dans lequel un passage d'alimentation en huile (137) à travers lequel l'huile refoulée de la pompe à huile (123) disposée dans ledit carter (39) est amenée vers le côté d'un bloc-cylindres (40), ledit passage d'alimentation en huile (137) étant prévu dans ledit carter (39), et un orifice de jet d'huile (143, 143') pour éjecter ladite huile vers le côté dudit maneton (46) et ledit piston (44) est prévu dans ledit carter (39) dans l'état où il communique directement avec une partie intermédiaire dudit passage d'alimentation en huile (137).

4. Moteur à cylindre unique à quatre temps selon la revendication 3, dans lequel ledit orifice de jet d'huile (143, 143') est prévu dans ledit carter (39) du côté supérieur dudit vilebrequin (37).

5. Moteur à cylindre unique à quatre temps selon la revendication 3 ou 4, dans lequel ledit carter (39) est composé d'une paire de moitiés de carter (39L, 39R) mutuellement accouplées, au moins l'une (39R) desdites deux moitiés de carter (39L, 39R) est pourvue d'une rainure de passage d'huile (142) pour former un passage d'huile (139) constituant une partie dudit passage d'alimentation en huile (137) entre les surfaces d'accouplement (134) desdites deux moitiés de carter (39L, 39R), et ledit orifice de jet d'huile (143) est formé entre lesdites surfaces d'accouplement (134) desdites deux moitiés de carter (39L, 39R) dans l'état de communication avec ladite rainure de passage d'huile (142).

6. Moteur à cylindre unique à quatre temps selon l'une quelconque des revendications 3 à 5, dans lequel ledit passage d'alimentation en huile (137) est prévu dans ledit carter (39) de sorte que ledit passage d'alimentation en huile (137) passe au voisinage dudit maneton (46) au moins dans sa partie en communication avec ledit orifice de jet d'huile (143, 143').

7. Moteur à cylindre unique à quatre temps selon la revendication 6, dans lequel ledit orifice de jet d'huile (143) est disposé dans une plage entourée par une paire de lignes verticales (VL1, VL2) passant respectivement par les extrémités gauche et droite d'un lieu de rotation (RL) d'une partie la plus éloignée d'un axe dudit vilebrequin (37) d'une périphérie extérieure d'une grande partie d'extrémité (45a) de ladite bielle (45), une ligne horizontale (HL) passant par l'extrémité la plus haute dudit lieu de rotation (RL), et ledit lieu de rotation (RL), tel que vu en projection dans un plan orthogonal à l'axe dudit vilebrequin (37).

8. Moteur à cylindre unique à quatre temps selon l'une quelconque des revendications 3 à 7, dans lequel une pluralité desdits orifices de jet d'huile (143) sont prévus dans ledit carter (39) dans l'état de communication directe avec des parties intermédiaires dudit passage d'alimentation en huile (137).

9. Moteur à cylindre unique à quatre temps selon la revendication 1 ou 2, dans lequel un corps principal de moteur (38) comprenant le carter (39) est monté sur un cadre de véhicule (15) d'une bicyclette assistée par moteur du côté avant d'une roue arrière (WR) dans une position telle qu'un axe de cylindre (C) est incliné vers l'avant vers le haut, avec une chambre de chaîne de came (81) prévue du côté gauche de l'axe de cylindre (C), la chambre de chaîne de came (81) logeant une chaîne de came (80) enroulée autour de la roue motrice d'enroulement (78, 248) pour transmettre la puissance du vilebrequin (37) à un arbre à cames (68) du dispositif d'actionnement de soupapes (67) ; une chaîne (200) pour transmettre les forces d'entraînement des pédales de pédalier (34) supportées en rotation sur le cadre de véhicule (15) du côté avant du corps principal de moteur (38) à la roue arrière (WR) est disposée du côté droit du corps principal de moteur (38) ; l'unité de transmission de puissance (T) pour transmettre la puissance du vilebrequin (37) à la roue arrière (WR) par l'intermédiaire d'un changement de vitesse est contenue dans un carter (158) comprenant ledit élément de carter disposé du côté gauche de la roue arrière (WR) de manière à former un bombement vers le côté gauche à partir du carter (39) ; et un orifice d'injection d'huile (148) en communication avec la chambre de chaîne de came (81) est prévu dans une surface latérale gauche du corps principal de moteur (38) du côté avant du carter (39).
